# FASCICULE DE BREVET EUROPEEN

(11) **EP 3 545 532 B1**
(45) Date de publication et mention de la délivrance du brevet: **04.11.2020**
(21) Numéro de dépôt: 17780128.9
(22) Date de dépôt: 10.10.2017
(51) Int. Cl.: G21C 19/18, G21C 19/20, G21D 3/00

(54) **OPTIMISATION DE MAINTENANCE DE CENTRALE NUCLÉAIRE**
OPTIMIERUNG DER WARTUNG EINES KERNKRAFTWERKS
OPTIMISATION OF NUCLEAR-POWER-STATION MAINTENANCE

(30) Priorité: 25.11.2016 FR 1661529
(43) Date de publication de la demande: 02.10.2019
(73) Titulaire: Electricité de France, 75008 Paris (FR)
(72) Inventeur: PETROU, Georgios, 75014 Paris (FR); LUCAS, Jean-Yves, 91370 Verrieres Le Buisson (FR); BENDOTTI, Pascale, 75008 Paris (FR)
(74) Mandataire: Plasseraud IP
(86) Numéro de dépôt international: PCT/EP2017/075765
(87) Numéro de publication internationale: WO 2018/095642

(56) Documents cités:
- FR-A1- 2 724 257
- US-A- 4 374 801
- US-A- 6 047 037
- US-A1- 2004 236 811

## Description

L'invention relève du domaine des centrales nucléaires de production d'électricité et en particulier de la maintenance des centrales à Réacteur à Eau sous Pression (REP).

Dans un réacteur opérationnel, le combustible nucléaire, sous forme de pastilles empilées, est logé dans des assemblages combustible, ou assemblages, prenant la forme d'ensembles de tubes métalliques. Un dispositif appelé « grappe » est logé dans chaque assemblage.

Lors de sessions de maintenance, le réacteur est mis à l'arrêt, diverses opérations de maintenance sont effectuées et le combustible peut être renouvelé. Certains au moins des assemblages sont remplacés par des assemblages neufs. Les grappes peuvent généralement être réutilisées. Dans une première phase, dite de déchargement, les assemblages sont extraits du réacteur et disposés dans un bâtiment annexe, dit bâtiment combustible, au moyen d'un ou de plusieurs premiers robots. Dans une seconde phase, dite de permutation, certaines grappes sont extraites de l'assemblage initial qui la contient pour être disposée dans un assemblage de destination. Les permutations sont effectuées dans le bâtiment combustible au moyen d'un ou plusieurs seconds robots. Dans une troisième phase, dite de rechargement, des assemblages contenant une grappe sont disposés dans le réacteur au moyen d'un ou de plusieurs des premiers robots. FR 2 724 257 et US 4 374 801 traitent de la manutention de tels assemblages.

En pratique, les manipulations en maintenance (déchargement, permutation et rechargement) sont souvent mises en œuvre sans qu'une planification précise desdites opérations n'ait été établie. Quand une planification est établie au préalable, elle est généralement indépendante entre les trois phases. Le nombre et la diversité des contraintes à respecter lors de telles opérations rendent complexe l'établissement d'une planification précise. La durée totale de la session de maintenance, et donc de l'arrêt du réacteur, est longue. Les sessions de maintenance sont coûteuses.

En outre, certaines des contraintes telles que l'identification des assemblages à remplacer sont parfois connues peu de temps avant l'arrêt du réacteur, voire après son arrêt. Les opérations de maintenance, y compris le renouvellement du combustible débutent alors au plus vite pour limiter la durée d'arrêt du réacteur.

Dans la plupart des cas, il est considéré que trouver la meilleure planification parmi le très grand nombre de combinaisons possibles est, soit impossible, soit trop chronophage. Le temps pour identifier la meilleure solution est supérieur au temps économisé en mettant en œuvre la meilleure solution plutôt qu'en mettant en œuvre les manipulations de maintenance sans planification préalable.

Enfin, le temps total pour réaliser chaque manipulation dépend aussi de la configuration de chaque centrale. Par conséquent, d'éventuelles règles dans la planification des manipulations et du renouvellement seraient difficilement transposables d'une centrale à une autre.

L'invention vient améliorer la situation.

La demanderesse propose un procédé de maintenance dans une centrale nucléaire au cours duquel
- chaque assemblage combustible parmi une pluralité est déplacé d'un emplacement initial jusqu'à un emplacement de destination,
- chaque grappe parmi une pluralité est déplacée d'un assemblage combustible initial jusque dans un assemblage combustible final, les déplacements de grappes étant réalisés dans une zone de refroidissement distante du réacteur,
- un déplacement de grappe est décomposé en un ou plusieurs transferts successifs entre lesquels la grappe est logée temporairement dans un support libre et compatible, et
- les déplacements des assemblages combustible et des grappes sont mis en œuvre par des robots respectifs. Le procédé comprend les étapes suivantes :
   a) planifier les déplacements d'éléments d'assemblage, la planification comprenant les opérations suivantes :
      a1) attribuer à chaque assemblage combustible un emplacement de destination,
      a2) identifier l'ensemble des transferts de grappes à effectuer et établir un ordre chronologique pour effectuer lesdits transferts,
   b) optimiser la planification, l'optimisation étant mise en œuvre par des moyens informatiques et comprenant les opérations suivantes :
      b1) estimer un temps pour réaliser les transferts de grappes identifiés à l'opération a2),
      b2) modifier certains au moins des paramètres de la planification de l'étape a),
      b3) estimer un temps pour réaliser les transferts de grappes avec les paramètres ainsi modifiés,
      b4) retenir les paramètres ainsi modifiés si l'estimation de temps calculée à l'étape b3) est inférieure à celle estimée précédemment,
      b5) réitérer à la suite les opérations b2), b3) et b4) au moins une fois, et
   c) déplacer les éléments d'assemblage en fonction du résultat de l'optimisation de l'étape b).

Un tel procédé permet de mettre en œuvre des manipulations de maintenance en maîtrisant la durée cumulée de la planification des manipulations de renouvellement, effectuées dans le bâtiment combustible, et de leur mise en œuvre réelle. Ceci contribue, si le renouvellement constitue une opération de maintenance située sur le chemin critique de la session de maintenance, à réduire la durée d'arrêt d'un réacteur. En outre, les étapes de planification et d'optimisation sont elles-mêmes adaptables en quasi temps réel de sorte que la durée de la planification-optimisation, dépendante de la puissance de calcul informatique et des contraintes considérées, peut elle-même être adaptée en modulant un niveau d'optimisation à atteindre. Lorsqu'une planification idéale ne peut pas être identifiée de manière certaine dans le temps imparti, alors le niveau d'optimisation, non idéal, peut être choisi de manière à respecter le temps imparti à la fois pour identifier une planification et pour la mettre en œuvre. En effet, il existe un risque que le gain de temps sur les manipulations de maintenance permis par une meilleure planification soit inférieur au temps nécessaire pour trouver ladite meilleure planification. Par exemple, le temps disponible avant la fin souhaitée de l'opération de maintenance peut être utilisé comme paramètre d'entrée pour régler la durée du procédé de l'invention, par exemple en jouant sur le nombre et le type d'itérations mises en œuvre à l'étape d'optimisation.

D'autres caractéristiques, détails et avantages de l'invention apparaîtront à la lecture de la description détaillée ci-après, et à l'analyse des dessins annexés, sur lesquels :
- la figure 1 montre une vue en perspective d'un couple d'éléments d'assemblage, soit un assemblage combustible logeant une grappe,
- la figure 2 montre une vue schématique d'une centrale nucléaire et de manipulations de maintenance selon l'invention, et
- les figures 3, 4 et 5 montrent des exemples de graphes orientés correspondants à des manipulations selon l'invention.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

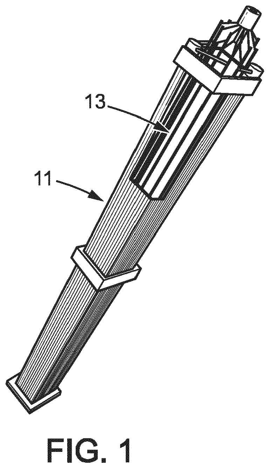

La figure 1 montre un assemblage combustible, ou assemblage 11, logeant une grappe 13. Dans la suite, les termes « éléments d'assemblage » désignent indistinctement les assemblages 11 et les grappes 13.

Dans l'exemple décrit ici, chaque grappe 13 est d'un type parmi les trois types suivants :
- les grappes de commande qui permettent de réguler l'énergie produite,
- les grappes sources qui initient la fission nucléaire, et
- les grappes bouchons qui permettent d'optimiser les flux hydrauliques et neutroniques de la cuve du réacteur.

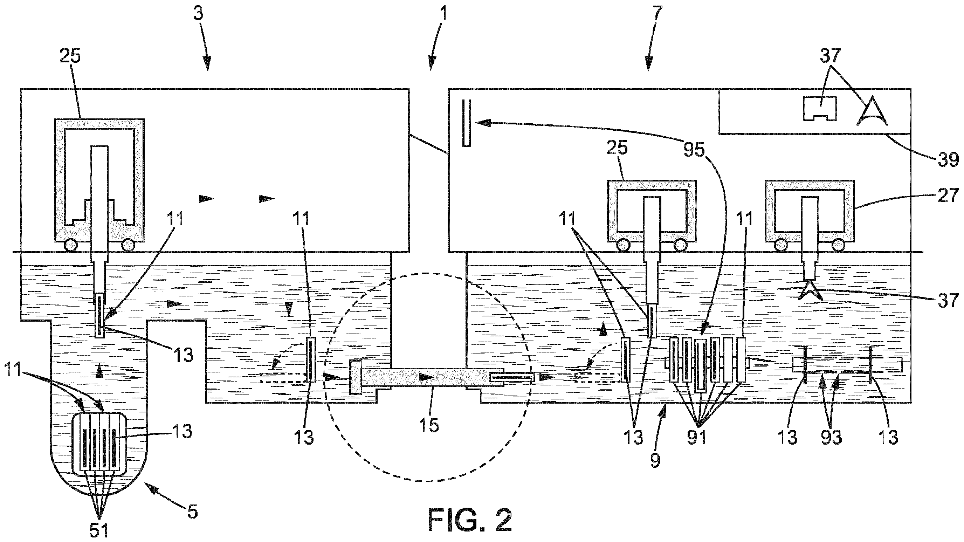

La figure 2 montre une partie d'une centrale nucléaire 1. La centrale nucléaire 1 comprend un bâtiment réacteur 3 logeant un réacteur 5, et une zone de refroidissement du combustible distante du réacteur 5, ici un bâtiment combustible 7 abritant une piscine 9 de refroidissement.

Le réacteur 5 comprend une pluralité d'emplacements 51 propres à recevoir chacun un assemblage 11. La piscine 9 comprend une pluralité d'emplacements 91, propres à recevoir chacun un assemblage 11. Chaque emplacement 91 prend par exemple la forme d'une alvéole ou d'une maille d'une grille permettant de maintenir un assemblage 11 sensiblement à la verticale.

Lorsque des emplacements 91 sont libres, c'est-à-dire dépourvus d'assemblage 11, les emplacements 91 ne sont généralement pas aptes à loger des grappes 13. Lorsque des assemblages 11 libres, c'est-à-dire dépourvus de grappe 13, sont disposés dans un emplacement 91 de la piscine 9, les assemblages 11 libres peuvent recevoir une grappe 13 au moins temporairement. De tels assemblages 11 forment des supports, ou contenants, pour les grappes 13.

Dans l'exemple décrit ici, la piscine 9 comprend en outre des étuis 93, distincts des emplacements 91, propres à recevoir chacun une ou plusieurs grappes 13. Des adaptateurs 95 sont en outre disponibles dans le bâtiment combustible 7. Les adaptateurs 95 sont des dispositifs mobiles agencés pour être fixés de manière amovible en un emplacement 91 libre de manière à rendre l'emplacement 91 apte à recevoir une grappe 13, au moins temporairement. Autrement dit, un emplacement 91 équipé d'un adaptateur 95 est fonctionnellement équivalent à un étui 93 et apte à loger une grappe 13. Dans la suite, on désigne par « support » tout élément de la piscine 9 apte à recevoir, au moins temporairement, une grappe 13. Ici, un support peut prendre la forme d'un assemblage 11, d'un étui 93, ou encore d'un emplacement 91 équipé d'un adaptateur 95. En général, seuls les étuis 93 sont aptes à recevoir plus d'une grappe 13 à la fois.

Dans l'exemple décrit ici, le réacteur 5 comprend 193 emplacements 51. En fonctionnement, le réacteur 5 loge donc 193 assemblages 11 logeant chacun une grappe 13. Le bâtiment combustible 7 comprend 450 emplacements 91, 2 étuis 93 et 10 adaptateurs 95. En pratique, les emplacements 91, étuis 93 et adaptateurs 95 sont rarement tous disponibles pour les manipulations de maintenance décrites ensuite. Certains d'entre eux peuvent par exemple stocker des éléments d'assemblage 11, 13 neufs en attente d'utilisation et/ou des éléments d'assemblage 11, 13 usagés et en attente d'une évacuation pour un recyclage. Avant la session de maintenance, 225 assemblages sont par exemple stockés dans la piscine 9. Chaque emplacement 51, chaque emplacement 91 et chaque étui 93 est identifié, par exemple au moyen d'un identifiant unique et/ou d'un identifiant du type correspondant à des coordonnées indiquant sa position dans la centrale 1. Chaque assemblage 11, chaque grappe 13 et chaque adaptateur 95 est identifié au moyen d'un identifiant unique. Ainsi, la position de chaque élément est connue à chaque instant.

En variante, le nombre d'emplacements 51 dans le réacteur 3, le nombre d'emplacements 91 dans la piscine 9, le nombre d'étuis 93 et/ou le nombre d'adaptateurs 95 est différent. En variante, les étuis 93 sont inexistants. Les adaptateurs 95 peuvent être absents.

Le bâtiment réacteur 3 et le bâtiment combustible 7 sont distincts l'un de l'autre. Un accès 15 est ménagé entre le bâtiment réacteur 3 et le bâtiment combustible 7. L'accès 15 est agencé pour permettre le passage des assemblages 11 d'un bâtiment à l'autre.

Lors d'une session de maintenance, le réacteur 5 est mis à l'arrêt et diverses interventions peuvent être réalisées, notamment le renouvellement du combustible. Au cours d'une session, certains au moins des assemblages 11 sont remplacés par des assemblages 11 neufs ou reconditionnés. Le type de grappe 13 dépend de l'emplacement 51 dans le réacteur 5. Lors du renouvellement d'un assemblage 11, la grappe 13 qui y est logée est généralement réutilisée. La grappe 13 est extraite de l'assemblage 11 usagé pour être déplacée puis insérée dans un assemblage 11 de remplacement. Lors du renouvellement d'une grappe 13 et si l'assemblage 11 d'origine est réutilisé, alors la grappe 13 usagée est extraite de l'assemblage 11 pour être déplacée en vue de son évacuation pour retraitement, puis une nouvelle grappe 13 est à son tour insérée dans l'assemblage 11. De telles opérations, appelées permutations, ne sont réalisées ni dans le réacteur 5, ni dans le bâtiment réacteur 3, mais dans la piscine 9 du bâtiment combustible 7.

Outre les assemblages 11 usagés ou abimés remplacés par des assemblages 11 neufs, les positions de certains assemblages 11 dans le réacteur 5 doivent être interverties alors même que les grappes 13 qui y sont logées doivent généralement garder les mêmes positions dans le réacteur 5. De telles interversions des assemblages 11 limitent l'usure des assemblages 11 en faisant varier et en équilibrant la distribution de puissance subie par chaque assemblage 11 en fonctionnement, cette distribution étant généralement radiale depuis le cœur du réacteur 5. Intervertir les assemblages 11 indépendamment des grappes 13 qui y sont logées implique aussi des permutations de grappes 13 entre les assemblages 11.

Pour réaliser les permutations, les assemblages 11, logeant chacun une grappe 13 respective, sont préalablement déplacés depuis leur emplacement 51 initial dans le réacteur 5 jusqu'à un emplacement 91 de destination du bâtiment combustible 7 par des opérations dites de déchargement. Suite aux permutations des grappes 13 dans les assemblages 11, chaque nouveau couple d'éléments d'assemblage, c'est-à-dire un assemblage 11 logeant une grappe 13, est à son tour déplacé en sens inverse depuis un emplacement 91 du bâtiment combustible 7 jusqu'à un emplacement 51 final du réacteur 5. Les manipulations de déplacement au retour dans le réacteur 5 sont appelées rechargement. La composition de chaque couple 11-13, leur emplacement 51 initial et leur emplacement final 51 dans le réacteur 5 constituent des contraintes, ou données d'entrées, pour la planification-optimisation des manipulations de renouvellement.

Ici, certaines grappes 13, par exemple les grappes de commande et les grappes source, sont chacune associée à un unique emplacement 51 respectif dans le réacteur 5. Au contraire, des groupes de grappes 13, par exemple des groupes de grappes bouchon, peuvent chacune être disposée indifféremment en plusieurs emplacements 51 dans le réacteur 5. Les grappes bouchon peuvent donc être indifféremment logées dans plusieurs assemblages 11 de destination parmi un groupe d'assemblages 11. Une grappe 13 ayant pour destination possible plusieurs assemblages 11 lors des permutations est dites banalisée. Les interversions nécessaires des assemblages 11 entre eux et les compatibilités partielles de certaines grappes 13 avec certains assemblages 11 constituent des contraintes supplémentaires. En variante, la compatibilité des grappes 13 avec les assemblages 11 et/ou les emplacements 51 finaux peut être indépendante des types de grappe.

Les opérations de déchargement et rechargement sont effectuées par un premier robot 25, ou un ensemble de premiers robots 25, aptes à manipuler les assemblages 11 tandis que les opérations de permutations sont effectuées par un second robot 27, ou un ensemble de seconds robots 27, aptes à manipuler les grappes 13. Dans l'exemple décrit ici, les premiers robots 25, qui déplacent les assemblages 11 vides ou logeant une grappe 13, sont compatibles avec tous les assemblages 11. Le seconds robot 27, qui déplace les grappes 13 d'un support 11, 93, 95 à un autre support 11, 93, 95, doit être équipé d'un outil spécialisé 37 compatible avec la grappe 13 à manipuler. Ici, chaque outil spécialisé 37 est compatible avec un unique type de grappe. Les compatibilités outil-grappe constituent des contraintes supplémentaires.

Les contraintes de compatibilité des outils spécialisés impliquent que, si le second robot 27 doit manipuler une grappe 13 d'un premier type, puis une grappe 13 d'un second type, alors le second robot 27 doit subir une opération de changement d'outil spécialisé 37 entre les deux manipulations. Une opération de changement d'outil 37 est généralement réalisée à proximité de la piscine 9 et présente une durée non négligeable. Une telle durée est sensiblement constante et connue pour chaque outil spécialisé 37. Dans l'exemple décrit ici, une opération de changement d'outil dure entre 30 et 45 minutes sans compter le temps de déplacement du robot 27 jusqu'à et depuis une zone 39 de changement d'outil.

Pour minimiser la durée des manipulations lors de la session de maintenance, il est donc souhaitable de minimiser le nombre de changements d'outils 37 au cours des permutations de grappes 13.

Pour transférer une grappe 13 d'un support 11, 93, 95 initial jusqu'à un support 11, 93, 95 de destination, le second robot 27 se déplace d'au-dessus de l'un jusqu'au-dessus de l'autre. Dans l'exemple décrit ici, le second robot 27 comprend un chariot agencé pour se déplacer sensiblement selon un plan horizontal au-dessus de la piscine 9 et se placer au-dessus des supports 11, 93, 95 à traiter. Les vitesses de déplacement du second robot 27 sont connues, sensiblement constantes et homogènes dans le plan. La position de chacun des supports 11, 93, 95 est aussi connue et par exemple déductible de leur identifiant respectif. Par conséquent, déduire le temps de trajet du second robot 27 pour aller d'un premier support 11, 93, 95 jusqu'à un second support 11, 93, 95 ne présente pas de difficulté particulière. Les temps pour parcourir les distances pour le second robot 27 sont proportionnels aux distances elles-mêmes. Par conséquent, sélectionner dans la suite un support 11, 93, 95 « *au plus près* » est équivalent à sélectionner un support 11, 93, 95 « *nécessitant un temps de trajet pour que le robot se déplace jusqu'au support 11, 93, 95 qui soit minimal ».*

Dans des variantes, les vitesses de déplacement du second robot 27 n'est pas homogène dans le plan. Par exemple, les déplacements se décomposent en des translations selon deux directions principales du plan et perpendiculaires entre elles. La vitesse du second robot 27 est sensiblement connue et constante sur chacune des deux directions mais sont différentes l'une par rapport à l'autre. Déduire les temps de trajet entre deux supports 11, 93, 95 dont les positions sont connues ne présente pas de difficulté particulière. Dans de tels cas, sélectionner un support 11, 93, 95 « *au plus près* » s'entend au sens du minimum de temps de trajet et non nécessairement au sens strict de distance métrique minimale.

Au déchargement, le déplacement d'un assemblage 11 a lieu depuis un emplacement 51 initial du réacteur 5 jusqu'à un emplacement 91 de destination de la piscine 9. Au chargement, le déplacement d'un assemblage 11 a lieu depuis un emplacement 91 de la piscine 9 jusqu'à un emplacement 51 final du réacteur 5. Les déplacements sont directs au sens que aucun autre emplacement intermédiaire 51, 91 ne reçoit temporairement l'assemblage 11 au cours des déplacements d'une session de maintenance. Par exemple, les assemblages 11 ne sont pas déplacés au cours des opérations de permutation des grappes 13.

Dans le cas d'un assemblage 11 réutilisé, c'est-à-dire initialement opérationnel dans le réacteur 5 et replacé dans le réacteur 5 en fin de session de maintenance, l'emplacement 91 de destination de la piscine 9 au déchargement et l'emplacement 91 initial dans la piscine 9 au chargement sont identiques. Une fois déchargé depuis le réacteur 5 dans la piscine 9, l'assemblage 11 est déplacé à nouveau seulement pour être chargé dans le réacteur 5 au cours de la même session de maintenance. En outre, l'emplacement 51 final dans le réacteur 5 est généralement différent de l'emplacement 51 initial pour assurer les interversions décrites ci-avant.

Dans le cas d'un assemblage 11 usagé, c'est-à-dire initialement opérationnel dans le réacteur 5 et mis au rebut ou recyclé en fin de session de maintenance, le déplacement au déchargement est aussi direct : aucun autre emplacement intermédiaire 51, 91 ne reçoit temporairement l'assemblage 11 au cours des déplacements. Une fois déchargé depuis le réacteur 5 dans la piscine 9, l'assemblage 11 reste dans l'emplacement 91 de destination de la piscine 9 jusqu'à la fin de la session de maintenance. Il est ignoré lors du chargement ultérieur.

Dans le cas d'un assemblage 11 neuf, c'est-à-dire initialement stocké dans un emplacement 91 de la piscine 9, l'assemblage 11 est ignoré lors du déchargement. Le déplacement au chargement depuis l'emplacement 91 de la piscine 9 jusqu'à l'emplacement final 51 du réacteur 5 est direct au sens que aucun autre emplacement intermédiaire 51, 91 ne reçoit temporairement l'assemblage 11 au cours des déplacements.

La diversité des manipulations que doivent subir les assemblages 11 (déchargement seulement, chargement seulement, ou déchargement puis chargement) constitue une contrainte supplémentaire.

Les manipulations de permutation comprennent des déplacements de grappes 13 d'un support initial 11, 93, 95 à un support final 11, 93, 95. Les grappes 13 qui sont extraites du réacteur 5 au cours de la maintenance ont donc pour support initial, lors des permutations, un assemblage 11. Les grappes 13 qui sont placées (ou replacées) dans le réacteur 5 au cours de la maintenance ont pour support final, lors des permutations, un assemblage 11. Les grappes 13 qui sont successivement extraites puis replacées dans le réacteur 5 ont pour support initial et support final, lors des permutations, des assemblages 11 généralement distincts l'un de l'autre. Les grappes 13 qui sont extraites du réacteur 5 sans y être replacées à la fin de la session de maintenance, par exemple pour une mise au rebut ou un recyclage, ont pour support final, lors des permutations, un assemblage 11 laissé dans la piscine 9 à la fin de la session de maintenance, ou un étui 93 ou encore un adaptateur 95. Les grappes 13 qui ne sont pas initialement dans le réacteur 5, par exemple des grappes neuves initialement disposées dans la piscine 9, ont pour support initial, lors des permutations, un assemblage 11 également initialement présent dans la piscine 9, ou bien un étui 93 ou encore un adaptateur 95. La diversité des supports 11, 93, 95 qui doivent accueillir les grappes constitue une contrainte supplémentaire.

Le déplacement d'une grappe 13 se décompose en un unique transfert du support initial 11, 93, 95 directement au support final 11, 93, 95 ou en plusieurs transferts successifs entre lesquels la grappe 13 est logée temporairement dans un support 11, 93, 95 intermédiaire. Les déplacements comprenant plusieurs transferts successifs et des stockages intermédiaires impliquent un plus grand nombre de manipulations que les transferts directs. La durée totale des manipulations s'en trouve augmentée. Il est donc souhaitable de réduire au minimum les transferts successifs. Néanmoins, certaines combinaisons de contraintes rendent obligatoires les transferts successifs.

Au cours des permutations, une grappe 13 ne peut être transférée dans un support 11, 93, 95, final ou de stockage temporaire, qu'à la condition que ledit support 11, 93, 95 soit à la fois libre et compatible. Certains transferts vers un support 11, 93, 95 ne peuvent donc être mis en œuvre qu'après qu'une grappe 13 soit extraite dudit support 11, 93, 95 au cours d'un transfert préalable. Par exemple, si deux grappes 13 logées chacune dans un assemblage 11 doivent être interverties l'une avec l'autre, alors il est nécessaire de stocker la première grappe 13 extraite du premier assemblage 11 dans un support 11, 93, 95 intermédiaire, puis de déplacer la seconde grappe 13 depuis le second assemblage 11 jusqu'au premier assemblage 11 libéré de la première grappe 13, pour enfin pouvoir déplacer la première grappe 13 depuis le support 11, 93, 95 intermédiaire jusque dans le premier assemblage 11. Ces contraintes supplémentaires sont appelées « contraintes de précédence ».

En outre, certains supports 11, 93, 95 sont aptes à recevoir seulement certaines grappes 13 parmi l'ensemble des grappes 13, ici en fonction du type de grappes. Ceci constitue une contrainte supplémentaire. Par exemple, les assemblages 11 sont théoriquement compatibles avec toutes les grappes 13, mais l'usure peut rendre difficile l'insertion de certaines grappes 13 de commande dans certains assemblages usés. Les adaptateurs 93 sont plutôt compatibles avec les grappes 13 bouchon et les grappes 13 source. De préférence, les adaptateurs 93 sont utilisés en tant que support intermédiaire seulement en dernier recours. Les étuis 95 sont compatibles avec toutes les grappes 13 mais ne sont, ici, pas utilisés en tant que support intermédiaire.

En variante, la compatibilité entre outil spécialisé 37 et grappe 13 peut être différente. Par exemple, un outil peut être compatible avec plus d'un type de grappe. En variante, les premiers robots 25 peuvent être aussi équipés d'outils spécialisés compatibles avec certains seulement des assemblages 11. Les types de grappes 13 mis en œuvre dans la centrale 1 peuvent être différents. Les relations de compatibilité entre les outils spécialisés 37 et les grappes 13 peuvent dépendre d'autres caractéristiques que le type de grappe. Les outils 37 équipant les seconds robots 27 peuvent aussi être compatibles avec plusieurs types de grappe ou avec toutes les grappes 13. Dans des variantes, les assemblages 11 et/ou les emplacements 51, 91 peuvent présenter des différences entre eux qui rendent incompatibles certains au moins des assemblages 11 avec certains au moins des emplacements 51, 91. Certaines grappes 13 peuvent être incompatibles avec certains supports 11, 93, 95, même pour un placement temporaire au cours des permutations.

La combinaison du nombre de contraintes, de la diversité des contraintes et de la multitude des planifications réalisables en raison du nombre d'éléments d'assemblage 11, 13 à traiter, rendent complexe l'organisation de la session de maintenance. Cette complexité rend impossible, ou du moins très difficile et chronophage, une planification sans l'aide d'outils informatiques des manipulations réalisables en pratique. La multitude des planifications réalisables en pratique rend impossible, ou du moins très difficile et chronophage, une sélection optimisée parmi les planifications possibles, sans l'aide d'outils informatiques.

Les exemples de procédé présentés ici se décomposent en trois étapes, elles-mêmes décomposées en opérations :
a) planifier les déplacements d'éléments d'assemblage 11, 13,
b) optimiser la planification de l'étape a),
c) déplacer les éléments d'assemblage 11, 13 en fonction du résultat de l'optimisation de l'étape b).

Avant ou au début d'une session de maintenance, les données suivantes sont connues. Autrement dit, elles sont considérées comme disponibles en tant que données d'entrée de la planification :
- l'emplacement 51, 91 initial de chaque assemblage 11 ;
- l'emplacement 51, 91 initial de chaque grappe 13 ;
- la composition initiale des couples support-grappe ;
- l'emplacement 51 final ou l'ensemble des emplacements 51 finaux possibles de chaque assemblage 11 ;
- l'emplacement 51 final ou l'ensemble des emplacements 51 finaux possibles de chaque grappe 13 ;
- les compositions finales possibles des couples assemblage-grappe ;
- les compatibilités des grappes 13 et des supports 11, 93, 95 ;
- les compatibilités des grappes 13 et des outils 37 du second robot 27 ;
- l'identification de chaque emplacement 91 initialement libre de la zone de refroidissement 7 ;
- l'identification de chaque support 11, 93, 95 initialement libre de la zone de refroidissement 7 ; et
- les durées estimées de chaque type de manipulation ou bien le lien qui permet de déduire la durée d'une manipulation en fonction des emplacements et de critères de vitesse de déplacement d'un robot.

Les données suivantes sont *a priori* indéterminées et sont déterminées par la planification puis éventuellement modifiées par l'optimisation. Autrement dit, elles sont considérées comme des données de sortie de la planification et de l'optimisation et des données d'entrée de l'étape c) de mise en œuvre des manipulations :
- l'emplacement 91 de destination de chaque assemblage 11 du déchargement ;
- l'ordre de déplacement des assemblages 11 du déchargement ;
- l'emplacement 91 initial de chaque assemblage 11 du chargement ;
- l'ordre de déplacement des assemblages 11 du chargement ;
- l'identification du ou des transferts composant le déplacement de chaque grappe 13 ;
- l'identification des supports 11, 93, 95 intermédiaires éventuels pour chaque transfert ; et
- l'ordre des transferts précités les uns par rapport aux autres.

Lorsque les emplacements 91 utilisables de la piscine 9 sont éloignés les uns des autres, la durée du déchargement et du chargement peut varier avec la somme des durées des trajets effectués par le premier robot 25 tandis que l'ordre des déplacements d'assemblages 11 est sensiblement sans effet sur la durée totale du déchargement et du chargement. Lors des étapes de planification et d'optimisation, l'ordre des déplacements d'assemblages 11 est, ici, ignoré. L'ordre peut par exemple être fixé arbitrairement.

Attribuer l'emplacement 91 de destination de chaque assemblage 11 du déchargement équivaut à définir l'ensemble des déplacements d'assemblages 11 à mettre en œuvre au déchargement et au chargement. Dans la suite, l'identification des emplacements 91 de destination s'entend lors du déchargement. Les déplacements en sens inverse, au chargement, peuvent être déduits sans difficulté.

La modélisation des contraintes à respecter en un graphe orienté facilite la planification et l'optimisation. Notamment, les graphes orientés peuvent être traités de manière au moins partiellement automatisée par des moyens informatiques. Une telle modélisation va maintenant être décrite. Il y sera ensuite fait référence pour décrire diverses variantes du procédé.

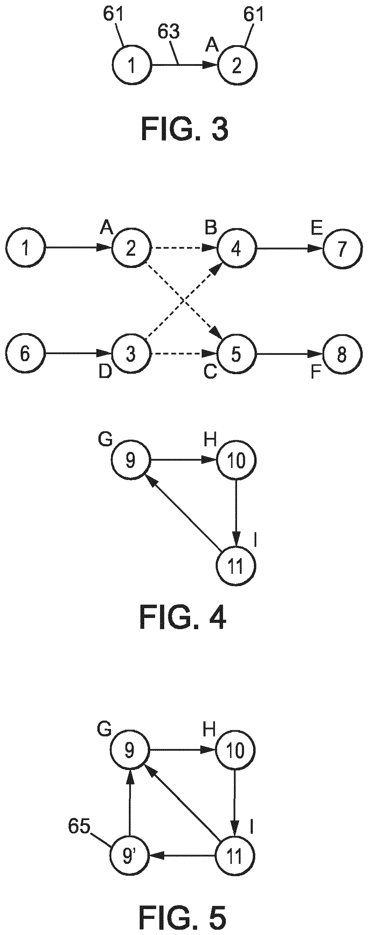

Les figures 3 à 5 représentent des graphes orientés.

Dans l'exemple décrit ici, chaque graphe orienté est construit de sorte que :
- les sommets 61 correspondent aux supports 11, 93, 95,
- les arcs 63 correspondent à un transfert d'une grappe 13 depuis un support 11, 93, 95 à un autre,
- les sommets Steiner 65 correspondent à des supports 11, 93, 95 logeant temporairement une grappe 13 entre deux transferts intermédiaires,
- la longueur de chaque chemin est définie, au moins en partie, comme un critère représentatif du temps nécessaire pour assurer les transferts de grappes 13 le long dudit chemin.

Sur les figures 3 à 5, les sommets 61, soit les emplacements 91 correspondant chacun à un support 11, 93, 95, sont chacun identifié par un numéro unique de 1 à 11. Le sommet Steiner 65 de la figure 5 est identifié par le numéro 9'. Les grappes 13 occupant les supports sont identifiés par des lettres A à I. Les arcs en trait continu représentent chacun un transfert à réaliser avec un premier outil 37 tandis que les arcs en trait discontinu représentent chacun un transfert à réaliser avec un second outil 37 différent du premier.

À cause des contraintes de précédence, un premier transfert peut avoir lieu seulement depuis un nœud 61 libre, c'est-à-dire dépourvu de grappe 13. Les arcs sont orientés depuis le support de destination vers le support initial, soit dans le sens contraire du déplacement réel des grappes 13 et dans le même sens que l'ordre des transferts successifs à réaliser.

Le critère représentatif du temps peut par exemple inclure le nombre de changements d'outils nécessaires sur le robot 27, la somme des distances à parcourir par le robot 27, le nombre de supports intermédiaires utilisés (correspondant au nombre de sommets Steiner 65) ou encore une combinaison d'au moins deux de ces paramètres pour parcourir un chemin. Par exemple, la somme du nombre de changements d'outils 37 nécessaires sur le second robot 27 et du nombre de supports intermédiaires 11, 93, 95 utilisés peut être un critère représentatif du temps. Afin que les estimations du temps soient les plus réalistes possibles, il est préférable de combiner le nombre de changements d'outils et les durées de déplacements du robot lorsque les données disponibles le permettent. Néanmoins, utiliser un seul des deux paramètres permet de comparer efficacement plusieurs chemins pour déterminer lequel est le plus rapide.

Les sommets Steiner 65 correspondent à des étapes intermédiaires dans les permutations de grappes 13. Ils tendent à allonger les durées par rapport aux transferts directs du support initial 11, 93, 95 au support final 11, 93, 95. Pour réduire la durée totale des manipulations lors d'une session de maintenance, il est donc préférable de minimiser le nombre de sommets Steiner 65. Il est aussi préférable de réduire le nombre de changements d'outils qui sont des manipulations chronophages.

L'étape a) de planification comprend les opérations suivantes :
a1) attribuer à chaque assemblage combustible 11, 13 un emplacement de destination 91,
a2) identifier l'ensemble des transferts de grappes 13 à effectuer et établir un ordre chronologique pour effectuer lesdits transferts.

Dans l'étape de planification, l'ordre des opérations peut varier. Par exemple, l'ensemble des transferts de grappes 13 à effectuer peut être identifié dans un premier temps, puis l'emplacement 91 de destination pour chaque élément d'assemblage 11, 13 est attribué et, enfin, l'ordre chronologique pour effectuer les transferts est identifié.

La planification prend en compte l'ensemble des contraintes afin d'être techniquement réalisable. La planification obtenue sert d'hypothèse de départ à l'étape d'optimisation qui suit. La planification peut être indépendante d'une quelconque estimation de durée de mise en œuvre des manipulations. Établir une planification respectant l'ensemble des contraintes techniques autre que les durées est suffisant. Les durées ne font pas partie des contraintes à ce stade mais sont utilisées pour calculer la durée totale des opérations.

Lors de l'opération d'attribution des emplacements de destination 91, un emplacement unique parmi les emplacements 91 libres de la piscine 9 est attribué à chacun des assemblages 11 et à chacune des grappes 13, incluant les assemblages 11 et les grappes 13 objets du déchargement et les assemblages 11 et grappes 13 neufs initialement présents dans la piscine 9. Les emplacements 91 attribués aux assemblages 11 neufs sont, ici, choisis pour correspondre à leurs positions effectives.

Dans un premier exemple, l'attribution des emplacements 91 aux assemblages 11 peut être en partie ou complètement aléatoire. Dans ce cas, les emplacements 91 attribués aux assemblages 11 neufs peuvent être choisis comme correspondant à leurs positions effectives de sorte que des déplacements avant la mise hors service du réacteur 5 sont superflus.

Dans un deuxième exemple, les assemblages 11 neufs initialement présents dans la piscine 9 sont placés dans des emplacements 91 situés au plus près de l'accès 15 au bâtiment réacteur 3, par exemple avant la session de maintenance. Ainsi, les trajets à effectuer par le premier robot 25 du bâtiment combustible 7 lors du chargement sont courts. Le placement des assemblages 11 neufs dans la piscine 9 peut être choisi et avoir lieu lors de leur réception, par exemple longtemps avant la session de maintenance elle-même.

Dans premier un exemple de l'opération d'identification et d'ordonnancement des transferts de grappes 13, une solution respectant les contraintes est sélectionnée indépendamment du nombre de support intermédiaire 11, 93, 95 et du nombre de changements d'outils que la solution implique. Par exemple, les contraintes de précédence peuvent être contournées en utilisant un support intermédiaire 11, 93, 95 à chaque fois qu'un transfert direct est impossible.

Dans un second exemple de l'opération d'identification et d'ordonnancement des transferts de grappes 13, l'ordre chronologique de l'ensemble des transferts de grappes 13 est établi en sélectionnant successivement tous les transferts, chaque fois en respectant les contraintes propres à chaque session de maintenance, notamment les contraintes de précédence et de compatibilité. Un critère de priorité peut être appliqué pour sélectionner d'abord les transferts qui ne nécessitent pas de changement d'outil 37 du second robot 27. Lorsque, les emplacements 91 de destination des assemblages 11 ont été préalablement attribués (opération a1), un autre critère de priorité peut être appliqué : sélectionner d'abord les transferts pour lesquels l'emplacement 91 du support 11, 93, 95 logeant la grappe 13 à transférer est le plus proche de la position du second robot 27. L'un ou l'autre des deux critères de priorité précités peut être mis en œuvre seul. Les deux critères peuvent aussi être combinés l'un avec l'autre en les hiérarchisant, par exemple en privilégiant le critère de non changement d'outil, puis, lorsque ce critère ne permet pas d'identifier un unique transfert parmi ceux possibles, appliquer le critère de la moindre distance par rapport au second robot 27. Le premier transfert peut aussi être sélectionné de sorte qu'aucun changement d'outil 37 du second robot 27 ne soit nécessaire en fonction de l'outil 37 équipant le second robot 27 au début de la session de maintenance.

L'étape a) peut être mise en œuvre par des moyens informatiques, par exemple par l'intermédiaire d'une modélisation en graphe orienté.

Dans un troisième exemple, un graphe orienté est construit tel que défini ci-avant, puis :
- le graphe est parcouru de manière à construire un ensemble de chemins identifiant l'ensemble des transferts de grappe 13 à effectuer ;
- un sommet Steiner 65 est associé à chacun des chemins formant circuit, chaque sommet Steiner étant ultérieurement attribué à un support 11, 93, 95 libre de la piscine 9.

Un exemple de chemin formant circuit est représenté en figure 4. Un chemin formant circuit correspond à un ensemble circulaire de permutations pour lesquelles chacun des supports 11, 93, 95 est initialement occupé par au moins une grappe 13. Chaque nœud 61 est initialement occupé par une grappe G, H et I. Les contraintes de précédence interdisent donc des transferts directs et obligent à mettre de côté temporairement une grappe 13 pour permettre les autres transferts. Cette mise de côté correspond à un sommet Steiner 65. La figure 5 montre une solution au circuit de la figure 4 : un sommet Steiner 65 est créé. L'une des grappes 13, ici la grappe G, peut être temporairement placée à l'emplacement 9' pour permettre le passage de la grappe H de l'emplacement 10 à l'emplacement 9, puis le passage de la grappe I de l'emplacement 11 à l'emplacement 10, et enfin le passage de la grappe G de l'emplacement temporaire 9' à l'emplacement 11. L'ensemble de chemins et les sommets Steiner créés constituent une solution techniquement réalisable qui peut servir d'hypothèse de départ pour l'étape d'optimisation.

Pour chaque circuit, le choix du sommet Steiner 35 utilisé peut faire changer l'ordre des outils 37 à utiliser le long du circuit. Dans l'exemple de la figure 5, le sommet Steiner 65 choisi correspond au placement temporaire de la grappe G dans l'emplacement 9'. Les outils suivants doivent être utilisés dans cet ordre : un outil compatible avec la grappe G, puis un outil compatible avec la grappe H, puis un outil compatible avec la grappe I, et enfin de nouveau un outil compatible avec la grappe G. En fonction des multi-compatibilités éventuelles des outils 37, le nombre de changements d'outils pour un circuit peut donc changer en fonction du sommet Steiner 65 choisi. En outre, si l'ordre des outils 37 à utiliser pour le circuit correspond un ordre d'outil déjà rendu nécessaire par d'autres opérations au cours de la session de maintenance, alors le circuit et le sommet Steiner 65 ne font pas augmenter le nombre de changement d'outils 37 au cours de l'ensemble de la session. Les grappes G, H, I, et de nouveau G seront manipulées au fur et à mesure que l'outil 37 compatible équipera le second robot 27. Au contraire, si l'ordre des outils 37 à utiliser pour le circuit ne correspond pas à un ordre d'outil rendu nécessaire par d'autres opérations au cours de la session de maintenance, alors le circuit et le sommet Steiner 65 choisi implique une augmentation du nombre de changement d'outils 37 au cours de l'ensemble de la session. Dans l'exemple, un outil 37 compatible avec la grappe G doit équiper le second robot 27 une première fois puis, plus tard, une seconde fois. Réduire le nombre de changements d'outil peut donc être possible en changeant l'attribution des sommets Steiner 65 à chaque circuit.

Dans un quatrième exemple de l'opération d'identification et d'ordonnancement des transferts de grappes 13, réalisée au moyen d'un graphe orienté, l'opération comprend :
- calculer l'ensemble des chemins disjoints couvrant les sommets 61, 65 et permettant de réaliser l'ensemble des transferts avec le minimum possible de changements d'outil 37 du second robot 27 et le minimum possible de sommet Steiner 65.

Le calcul est mis en œuvre par des moyens informatiques et des librairies d'optimisation mathématique pour la résolution de Problèmes Linéaires en Nombres Entiers (PLNE).

Le formalisme utilisé pour la résolution du PLNE peut présenter une grande variété, notamment en fonction des contraintes et spécificités propres à chaque session de maintenance et à chaque centrale. Néanmoins, ce formalisme ne pose aucune difficulté particulière aux techniciens du domaine. Quel que soit le formalisme utilisé, le problème mathématique à résoudre consiste à calculer l'ensemble des chemins disjoints couvrant les sommets 63, 65 du graphe en respectant les deux conditions suivantes :
- garantir que chaque grappe 13 atteigne un des assemblages 11 parmi ceux autorisés d'après les contraintes en entrée, via un ou plusieurs passages par des sommets Steiner 65 si nécessaire ;
- minimiser le nombre de changements d'outils 37 et le nombre de sommets Steiner 65.

Le PLNE est résolu de manière connue en soit au moyen d'une librairie d'optimisation mathématique. Dans l'exemple décrit ici, la librairie « *IBM CPLEX Optimizer* » est utilisée et montre généralement de bonne performance. Par exemple, la demanderesse a obtenu, dans des scénarios-type, des solutions dans un délai de calcul compris entre une dizaine de secondes et quelques minutes lors de ses essais avec des contraintes de situations réelles.

Identifier l'ensemble des transferts de grappes 13 et établir un ordre chronologique pour effectuer lesdits transferts au moyen de la résolution d'un PLNE permet d'assurer que la solution est théoriquement optimale. Cependant, la modélisation en PLNE et sa résolution sont appliquées à l'identification et à l'ordonnancement des permutations de grappes et pas à l'attribution des emplacements 91 de destination des assemblages 11. La longueur de chaque chemin est définie uniquement comme le nombre de changements d'outils nécessaires sur le robot 27 pour assurer les transferts de grappes 13 le long de chaque chemin. L'utilisation du PLNE ne permet pas, ici, de considérer les temps de déplacement du second robot 27. Cette méthode fournit donc une identification des permutations de grappes 13 et un ordonnancement des permutations indépendants des distances et des positions relatives des supports 11, 95, 93 dans la piscine 9.

La planification obtenue peut être utilisée comme hypothèse de départ pour l'étape d'optimisation qui suit. Durant l'optimisation, les positions relatives des supports 11, 95, 93 dans la piscine 9 sont considérées. La demanderesse a constaté que la mise en œuvre d'une identification et d'un ordonnancement des permutations par résolution de PLNE permettait en soit de réduire la durée totale des manipulations réelles. Autrement dit, l'optimisation obtenue à la fin de l'étape d'optimisation est généralement de meilleure qualité lorsque l'opération préalable d'identification et d'ordonnancement des permutations de grappes 13 a été réalisée par résolution d'un PLNE, soit une résolution dite « exacte », indépendamment de la manière de réaliser l'étape d'optimisation par la suite.

Les étapes de planification et d'optimisation peuvent être mises en œuvre dès que les contraintes sont connues (identification des assemblages à changer, identification des grappes à changer, occupation des emplacements 51, 91, etc.) et donc dans certains cas avant l'arrêt du réacteur 5 alors que le réacteur 5 est encore opérationnel. Au contraire, l'étape de mise en œuvre des manipulations réelles des éléments d'assemblages 11, 15 ne peut débuter que lorsque le réacteur 5 est à l'arrêt. Par conséquent, lorsque les contraintes sont connues longtemps avant l'arrêt du réacteur 5, les durées de résolution du PLNE, ou temps de calcul, sont sans effet sur la durée d'arrêt du réacteur 5. Par exemple, si les contraintes sont connues au moins la semaine précédant l'arrêt du réacteur 5, alors la solution du PLNE et les résultats de l'optimisation sont disponibles bien avant l'arrêt du réacteur 5, même si la résolution du PLNE dure plusieurs heures, voire 2 ou 3 jours. En pratique, cette situation correspond souvent aux sessions de maintenance périodiques prévues de longue date.

On souhaite généralement débuter au plus vite les manipulations réelles à l'arrêt du réacteur 5 de manière à terminer les opérations de manipulation au plus vite, typiquement bien avant l'instant souhaité de remise en fonctionnement du réacteur 5. Dans certaines situation, les temps de calcul pour la résolution du PLNE peuvent être incompatibles, ou au moins *a priori* incompatibles, avec le souhait de pouvoir débuter l'étape c) de déplacement des éléments d'assemblage 11, 13 au plus vite après l'arrêt du réacteur 5. Dans de telles situations, l'étape de planification est de préférence mise en œuvre selon l'un des autres exemples précédents qui permettent d'obtenir rapidement une solution réalisable mais dont la qualité d'optimisation est perfectible.

Ainsi, la manière d'établir l'ordre chronologique pour effectuer les transferts de grappes 13 peut être choisis dépendant d'un critère relatif au temps disponible prévu avant la remise en fonctionnement du réacteur 5.

L'étape b) d'optimisation de la planification issue de l'étape a) comprend les opérations suivantes :
b1) estimer un temps pour réaliser les transferts des grappes 13 planifiés à l'opération a2),
b2) modifier certains au moins des paramètres de la planification de l'étape a),
b3) estimer un temps pour réaliser les transferts des grappes 13 avec les paramètres ainsi modifiés,
b4) retenir les paramètres ainsi modifiés si l'estimation de temps calculée à l'étape b3) est inférieure à celle estimée précédemment,
b5) réitérer à la suite les opérations b2), b3) et b4) au moins une fois.

En d'autre termes, la suite des opérations b2) à b4) forme une boucle itérative. À chaque itération, les paramètres de la planification la plus efficace sont sélectionnés.

Les estimations de temps des opérations b1) et b3) peuvent être effectuées au moyen des données d'entrées connues, notamment les distances à parcourir par les robots, les vitesses des robots et les durées de chaque changement d'outil.

Dans la suite, on décrit trois premières séries d'itérations des opérations b2) à b4). Les trois séries sont appelées respectivement première série, second série et troisième série. Chacune des trois séries, lorsqu'elle est mise en œuvre, améliore la qualité de l'optimisation, c'est-à-dire la réduction du temps total nécessaire aux manipulations de l'étape c). La combinaison des trois séries dans l'étape d'optimisation, de préférence la première, puis la seconde, puis la troisième, permet d'améliorer encore la qualité de l'optimisation. En variante, l'ordre de mise en œuvre de la deuxième et de la troisième série peut être inversé : la troisième série est mise en œuvre avant la seconde série.

Au cours des trois séries, l'estimation du temps de chaque transfert se base préférentiellement sur le nombre de changements d'outils le long de chaque chemin. En effet, à ce stade, l'attribution des emplacements de destination 91 n'est pas encore optimisée et peut avoir été fixée aléatoirement comme expliqué précédemment. Il est donc plus réaliste et efficace d'optimiser l'identification et l'ordonnancement des permutations de grappes indépendamment de l'attribution des emplacements de destination 91 et en ignorant les temps de déplacement du second robot 27.

Les séries d'itérations nécessitent préalablement, par exemple au cours de l'opération d'identification et d'ordonnancement des transferts de grappes 13, de :
- parcourir un graphe orienté de manière à construire un ensemble de chemins identifiant l'ensemble des transferts de grappes 13 à effectuer, et
- attribuer un sommet Steiner 65 à chacun des chemins formant circuit.

Dans la première série de plusieurs itérations des opérations b2), b3), b4) :
- l'opération b1), respectivement b3), consiste à évaluer le temps pour réaliser chacun des transferts des grappes 13 selon l'ensemble de chemins, hors circuits, en assimilant la longueur des chemins obtenus au temps de chaque transfert,
- l'opération b2) consiste à parcourir aléatoirement le graphe de manière à construire un ensemble de chemins, hors circuits, identifiant l'ensemble des transferts de grappes 13 à effectuer,
- l'opération b4) consiste à retenir l'ensemble de chemins construits si la longueur des chemins calculée à l'étape b3) est inférieure à celle des chemins précédents.

Dans la seconde série de plusieurs itérations des opérations b2), b3), b4) :
- l'opération b1) consiste à évaluer le temps pour réaliser les transferts des grappes 13 selon l'ensemble de chemins, hors circuits, en assimilant la longueur des chemins obtenus au temps des transferts correspondants,
- l'opération b2) consiste à croiser des couples de chemins en leur sommet 61 commun de sorte que la longueur du chemin le plus long du couple après croisement soit inférieure à la longueur du chemin le plus long du couple avant croisement,
- l'opération b3) consiste à évaluer le temps pour réaliser les transferts des grappes 13 selon l'ensemble de chemins en assimilant la somme des longueurs du chemin le plus long de chaque couple après croisement au temps des transferts correspondants,
- l'opération b4) consiste à retenir l'ensemble de chemins après croisement si la somme calculée à l'étape b3) est inférieure à celle des chemins avant croisement.

Le croisement d'un couple d'un premier chemin original et d'un second chemin original en leur sommet commun peut être défini comme l'opération qui crée deux nouveaux chemins :
- un premier nouveau chemin constitué des arcs du premier original jusqu'au sommet commun et des arcs du second chemin original après le sommet commun ; et
- un second nouveau chemin constitué des arcs du second chemin original jusqu'au sommet commun et des arcs du premier chemin original après le sommet commun.

Dans la troisième série de plusieurs itérations des opérations b2), b3), b4) :
- l'opération b1) consiste à évaluer le temps pour réaliser les transferts des grappes 13 selon l'ensemble des chemins, y compris les circuits, en assimilant la longueur des chemins obtenus au temps des transferts correspondants,
- l'opération b2) consiste à changer l'attribution des sommets Steiner 65 à chacun des chemins formant circuit,
- l'opération b3) consiste à évaluer le temps pour réaliser les transferts des grappes 13 selon l'ensemble de chemins, y compris les circuits, en assimilant la somme des longueurs des chemins au temps des transferts correspondants,
- l'opération b4) consiste à retenir l'attribution des sommets Steiner 65 à chacun des chemins formant circuit si le temps évalué à l'étape b3) est inférieur à celui précédemment évalué.

La première série comprend N₁ itérations, où N₁ est de préférence compris entre 200 et 5 000, par exemple environ 2 000. La seconde série comprend N₂ itérations, où N₂ est de préférence choisis aussi élevé que nécessaire pour parcourir exhaustivement l'ensemble des possibilités de croisements. La troisième série comprend N₃ itérations, où N₃ est de préférence choisis aussi élevé que nécessaire pour tester exhaustivement les utilisations possibles de sommets Steiner 65.

La mise en œuvre de l'une des trois séries ou de plusieurs d'entre elles permet d'optimiser les permutations de grappes 13, en particulier en réduisant le nombre de changements d'outil spécialisé 37 sur le second robot 27, indépendamment de l'attribution des emplacements 91 des supports 11, 93, 95. Effectuer de telles améliorations peut être qualifié de méthode heuristique. La qualité de l'optimisation et le temps de calcul par les moyens informatiques augmentent avec le nombre d'itérations. La demanderesse a néanmoins constaté que le rapport qualité d'optimisation sur temps de calcul est meilleur aux environs de 2 000 itérations pour la première série. En pratique, la qualité de l'optimisation peut être choisie en fonction de contraintes de délais qui tendent à limiter les temps de calcul. De tels méthodes présentent l'avantage de pouvoir choisir à l'avance et avec une bonne précision le temps de calcul en jouant sur le nombre d'itérations.

Afin d'optimiser l'attribution des emplacements 91 pour les supports 11, 93, 95 et pour l'attribution des supports intermédiaires (sommets Steiner 65), en particulier, ici, les assemblages 11, d'autres séries d'itérations peuvent être mises en œuvre. Ces autres séries prennent en données d'entrée une identification et un ordonnancement des permutations de grappes 13. L'identification et l'ordonnancement peuvent correspondre au résultat de la première étape de planification, ou, de préférence, au résultat de l'optimisation issue de la mise en œuvre de l'une au moins des trois premières séries d'itérations décrites ci-avant.

Dans une quatrième série de plusieurs itérations des opérations b2), b3), b4), l'opération b2) comprend la modification de l'attribution des emplacements de destination 91 aux assemblages 11 de la manière suivante :
ii/ sélectionner les assemblages combustible 11 situés dans un emplacement initial 51 dans le réacteur 5 et logeant initialement une grappe 13 dont le support 11, 93, 95 final est situé dans la zone de refroidissement 7,
iii/ attribuer à chaque assemblage 11 sélectionné en ii/ un emplacement 91 de destination aléatoire parmi les emplacements 91 de destination situés au plus près dudit support 11, 93, 95 final de la grappe 13,
iv/ attribuer à chaque assemblage 11 ayant un emplacement initial 51 dans le réacteur 5 et non sélectionné en ii/, aléatoirement les uns par rapport aux autres, un emplacement 91 de destination dans la zone de refroidissement 7 au plus près de l'accès 15 au réacteur 5.

Ici, les attributions ii/ et iii/ sont prioritaires par rapport aux attributions iv/. Par exemple, les attributions iv/ ne sont effectuées qu'une fois que toutes les attributions ii/ et iii/ ont été réalisées. À chaque attribution iii/, de nouveaux assemblages combustibles 11 peuvent devenir éligibles à la sélection ii/. Il est donc préférable de réitérer plusieurs fois à la suite la succession ii/ et iii/ jusqu'à ce que plus aucun assemblage combustible 11 ne corresponde au critère de sélection de ii/. Chaque itération des opérations b2), b3), b4) comprend alors plusieurs itérations de ii/-iii/. Seulement ensuite (iv/), les assemblages combustible 11 qui ne sont pas situés dans un emplacement initial 51 dans le réacteur 5 et logeant initialement une grappe 13 dont le support 11, 93, 95 final est situé dans la zone de refroidissement 7 se voient attribuer les emplacements laissés libres par les assemblages combustible 11 situés dans un emplacement initial 51 dans le réacteur 5 et logeant initialement une grappe 13 dont le support 11, 93, 95 final est situé dans la zone de refroidissement 7.

L'opération b2) comprenant des attributions aléatoires, chaque itération conduit à des attributions différentes. Ceci permet, sur un grand nombre d'itérations, d'améliorer l'attribution. La quatrième série comprend N₄ itérations, où N₄ est de préférence compris entre 200 et 2 000, par exemple environ 800.

La mise en œuvre de la quatrième série d'itérations permet d'optimiser les permutations de grappes 13, en particulier en réduisant les distances parcourues par le second robot 27 au cours des permutations et qui sont fonction de l'attribution des emplacements 91 des assemblages 11. Effectuer de telles améliorations peut être qualifié de méthode heuristique. La qualité de l'optimisation et le temps de calcul par les moyens informatiques augmentent avec le nombre d'itérations. La demanderesse a néanmoins constaté que le rapport qualité d'optimisation sur temps de calcul est meilleur aux environs de 800 itérations pour la quatrième série. En pratique, la qualité de l'optimisation peut être choisie en fonction de contraintes de délais qui tendent à limiter les temps de calcul. De telles méthodes permettent de choisir à l'avance et avec une bonne précision le temps de calcul en jouant sur le nombre d'itérations.

Optionnellement, l'étape d'optimisation comprend l'opération suivante :
i'/ modifier (ou établir) l'ordre chronologique de l'ensemble des transferts de grappes 13 en sélectionnant successivement tous les transferts, chaque fois parmi ceux pour lesquels le support 11, 93, 95 de destination est libre, en commençant par le transfert pour lequel l'emplacement 91 du support 11, 93, 95 logeant la grappe 13 à transférer est le plus proche d'une position initiale du second robot 27, puis en sélectionnant successivement les transferts restants de sorte que l'emplacement 91 du support 11, 93, 95 logeant la grappe 13 à transférer soit le plus proche de l'emplacement 91 du support 11, 93, 95 logeant la grappe 13 précédente à la fin du transfert précédent.

L'opération i' est de préférence réalisée lorsque l'attribution des emplacements de destination 91 est au moins en partie optimisée, par exemple à la suite de la quatrième série d'itérations. Ainsi, l'étape i' constitue une amélioration constructive des permutations qui permet de réduire les temps de déplacements du second robot 27 lors des permutations en se basant sur les emplacements, désormais optimisés, des assemblages 11 contrairement à ce qui était possible au stade des première, seconde et troisième séries décrites ci-avant. L'opération i'/ correspond sensiblement à l'application du critère de la moindre distance décrit ci-avant.

Dans une cinquième série de plusieurs itérations des opérations b2), b3), b4), l'opération b2) comprend l'interversion des rangs de plusieurs transferts de grappes 13 dans l'ordre chronologique.

L'interversion étant aléatoire, chaque itération conduit à des ordres chronologiques différents. Ceci permet, sur un grand nombre d'itérations, d'améliorer l'ordre. La cinquième série comprend N₅ itérations appliquées sur X transferts, où X est de préférence égal à 2, 3 ou 4 et où N₅ est de préférence compris entre 500 et 4 000. Par exemple 2 000 itérations pour deux rangs intervertis et 1 000 itérations pour trois ou quatre rangs intervertis.

La mise en œuvre de la cinquième série d'itérations permet d'optimiser les permutations de grappes 13, en particulier en réduisant les distances parcourues par le second robot 27 entre deux permutations, les distances étant fonction de l'attribution des emplacements 91 des assemblages 11. Effectuer de telles améliorations peut être qualifié de méthode heuristique. La qualité de l'optimisation et le temps de calcul par les moyens informatiques augmentent avec le nombre d'itérations. La demanderesse a néanmoins constaté que le rapport qualité d'optimisation sur temps de calcul est meilleur aux environs de 1 000 itérations pour 3 ou 4 rangs intervertis et aux environ de 2 000 pour 2 rangs intervertis. En pratique, la qualité de l'optimisation peut être choisie en fonction de contraintes de délais qui tendent à limiter les temps de calcul. De telles méthodes permettent de choisir à l'avance et avec une bonne précision le temps de calcul en jouant sur le nombre d'itérations.

De préférence, la cinquième série est mise en œuvre postérieurement à la quatrième série, par exemple à la suite de l'opération optionnelle i' décrite ci-avant. La cinquième série peut aussi être mise en œuvre sans la quatrième série, par exemple lorsque l'étape de planification a été préalablement réalisée aléatoirement. Dans le contexte de la cinquième série d'itérations, l'estimation du temps pour réaliser les transferts de grappes 13 est basée sur les temps de trajet du second robot 27.

Dans une sixième série de plusieurs itérations des opérations b2), b3), b4), l'opération b2) comprend :
v/ intervertir aléatoirement les attributions d'emplacements 91 de destination de plusieurs assemblages 11 ayant un emplacement initial 51 dans le réacteur 5.

L'interversion étant aléatoire, chaque itération conduit à des attributions d'emplacements 91 de destination différentes. Ceci permet, sur un grand nombre d'itérations, d'améliorer l'attribution. La sixième série comprend N₆ itérations appliquées sur Y emplacements 91, où Y est de préférence égal à 2 ou 3 et où N₆ est de préférence compris entre 500 et 3 000. Par exemple 2 000 itérations pour deux emplacements 91 intervertis et 1 000 itérations pour trois emplacements 91 intervertis.

La mise en œuvre de la sixième série d'itérations permet d'optimiser encore les permutations de grappes 13, en particulier en réduisant la distance totale parcourue par le second robot 27, la distance totale étant fonction de l'attribution des emplacements 91 des assemblages 11. Effectuer de telles améliorations peut être qualifié de méthode heuristique. La qualité de l'optimisation et le temps de calcul par les moyens informatiques augmentent avec le nombre d'itérations. La demanderesse a néanmoins constaté que le rapport qualité d'optimisation sur temps de calcul est meilleur aux environs de 1 000 itérations pour trois emplacements 91 intervertis et aux environ de 2 000 pour deux emplacements 91 intervertis. En pratique, la qualité de l'optimisation peut être choisie en fonction de contraintes de délais qui tendent à limiter les temps de calcul. De telles méthodes permettent de choisir à l'avance et avec une bonne précision le temps de calcul en jouant sur le nombre d'itérations.

De préférence, la sixième série est mise en œuvre postérieurement à la quatrième série et/ou à la cinquième série, par exemple à la suite de la cinquième série. La sixième série peut être mise en œuvre indépendamment des quatrième et cinquième séries, par exemple lorsque l'étape de planification a été préalablement réalisée aléatoirement. Dans le contexte de la sixième série d'itérations, l'estimation du temps pour réaliser les transferts de grappes 13 est basée sur les temps de trajet du second robot 27.

Chacune des quatrième, cinquième et sixième séries est optionnelle, par exemple lorsque l'étape de planification a été préalablement réalisée aléatoirement. Chacune améliore la qualité de l'optimisation en identifiant une attribution d'emplacements de destination 91, une identification et un ordonnancement des transferts de grappes conjointement optimisés. L'étape d'optimisation produit donc une planification optimisée par rapport à la planification originale de la première étape. Le temps total nécessaire aux manipulations d'éléments d'assemblage 11, 13 est réduit. La combinaison des trois séries, de préférence d'abord la quatrième, puis la cinquième, et enfin la sixième, permet d'améliorer encore la qualité de l'optimisation en améliorant successivement différents paramètres.

De manière générale, lorsque le temps d'optimisation n'est pas un critère limitant pour une session de maintenance, il est possible de mettre en œuvre une méthode exacte d'identification des transferts de grappes, par exemple en utilisant la résolution d'un PLNE. Puis, une méthode de type heuristique permet d'optimiser le placement des supports dans la piscine, par exemple une combinaison des quatrième, cinquième et sixième séries d'itérations. Au cours de la méthode heuristique, l'identification et l'ordonnancement des transferts de grappes sont encore améliorés en fonction des changements de paramètres dans l'attribution des emplacements de destination.

Pour chaque partie de l'étape de planification et de l'étape d'optimisation, il est possible d'estimer à l'avance le temps de calcul nécessaire en fonction des données d'entrée, c'est-à-dire les contraintes propres à chaque session de maintenance. Par conséquent, le temps de calcul total, c'est-à-dire la durée des étapes de planification et d'optimisation, peut être réduit, par exemple :
- en remplaçant la méthode PLNE par une méthode heuristique pour l'identification des permutations de grappes ;
- en supprimant certaines séries d'itérations ; et/ou
- en réduisant le nombre d'itérations dans certaines au moins des séries d'itération.

Comme cela a été décrit ci-avant, le procédé peut prendre en considération un grand nombre et une grande variété de contraintes. Par conséquent, le procédé est adapté à un grand nombre de configurations de centrales existantes ou futures. Certaines contraintes sont complexes à appréhender, par exemple les grappes banalisées qui n'ont pas de destination unique imposée. De telles contraintes tendent à complexifier le problème. Dans le contexte du procédé proposé, les combinaisons possibles supplémentaires, c'est-à-dire les planifications techniquement réalisables, sont utilisées pour améliorer l'optimisation.

L'étape des déplacements d'éléments d'assemblage 11, 13 selon l'optimisation obtenue peut être en partie ou totalement automatisée. L'attribution d'emplacements de destination 91, la planification et l'ordonnancement des transferts de grappes 13 peuvent prendre la forme de données traitées par des moyens informatiques et par exemple converties en instructions à destination des premiers robots 25 et/ou des seconds robots 27 pour réaliser les manipulations correspondantes.

La demanderesse a mis à l'épreuve le procédé avec des contraintes réelles tirées de sessions de maintenance réelles sur des réacteurs de centrales nucléaires en France. Le tableau suivant donne des exemples d'économies de temps permises par la mise en œuvre du procédé par rapport à l'application de règles fixes et basiques corrigées manuellement au cas par cas. La durée totale d'une session de maintenance de renouvellement du combustible pour les réacteurs du tableau était jusqu'à maintenant d'environ 48 heures. Le tableau compare aussi le nombre d'outils spécialisés 37 utilisés sur le second robot 27 au cours d'une session de maintenance avec les règles métier usuelles et avec la mise en œuvre du procédé.

| Réacteur | Sans le procédé | Avec le procédé | Gain de temps | | |
|---|---|---|---|---|---|
| | | | Trajet du second robot 27 | Changements d'outil | Total |
| Chinon 1 | 4 outils | 3 outils | 0h40 | 1h00 | 1h40 |
| Gravelines 1 | 6 outils | 4 outils | 1h00 | 3h00 | 4h00 |
| Gravelines 4 | 3 outils | 3 outils | 1h00 | 0h00 | 1h00 |
| Gravelines 6 | 4 outils | 3 outils | 1h00 | 1h30 | 2h30 |
| Chinon 2 | 4 outils | 3 outils | 1h00 | 0h45 | 1h45 |
| Chinon 4 | 3 outils | 3 outils | 0h40 | 0h00 | 0h40 |

Jusqu'à maintenant, les critères de planification établis pour les anciennes centrales étaient transposés aux configurations des nouvelles centrales. Or, les contraintes dans les nouvelles centrales sont généralement différentes des contraintes dans les anciennes centrales. Les corrections et adaptations manuelles étaient donc plus nombreuses et plus chronophages pour la maintenance et le renouvellement du combustible dans les réacteurs récents que dans les réacteurs anciens. Autrement dit, la demanderesse propose une solution aisément adaptable à chaque configuration de centrale et à chaque situation d'une session de maintenance, ce qui est particulièrement avantageux pour les nouvelles centrales. Le tableau indique seulement les gains de temps sur les phases de manipulations physiques par les robots. En outre, l'automatisation permise par le procédé permet de réduire aussi les durées de préparation et de programmation préalable des robots. Sur les réacteurs le plus anciens, contenant généralement moins d'assemblages que dans les réacteurs récents, le gain de temps supplémentaire est d'environ 30 minutes à une heure. Sur les réacteurs récents, appartenant au «palier N4 » en France, le gain de temps supplémentaire atteint 2 à 3 heures.

Les divers exemples et variantes décrits ci-avant sont, sauf incompatibilité manifeste, généralement combinables les uns avec les autres. Certaines combinaisons tendent à privilégier plutôt la qualité de l'optimisation des durées de manipulations tandis que d'autres privilégient la rapidité d'obtention d'un plan de manipulations. Le lecteur saura sélectionner les combinaisons les plus adaptées à chaque contexte industriel. Les exemples chiffrés donnés ici illustrent des situations réelles étudiées par la demanderesse. L'invention ne se limite pas aux exemples de procédés décrits ci-avant, seulement à titre d'exemple, mais elle englobe toutes les variantes que pourra envisager l'homme de l'art dans le cadre des revendications ci-après.

## Revendications

1. Procédé de maintenance dans une centrale nucléaire au cours duquel
- chaque assemblage combustible (11) parmi une pluralité est déplacé d'un emplacement initial (51) jusqu'à un emplacement de destination (91),
- chaque grappe (13) parmi une pluralité est déplacée d'un assemblage combustible (11) initial jusque dans un assemblage combustible (11) final, les déplacements de grappes (13) étant réalisés dans une zone de refroidissement (7) distante du réacteur (5),
- un déplacement de grappe (13) est décomposé en un ou plusieurs transferts successifs entre lesquels la grappe (13) est logée temporairement dans un support (11, 93, 95) libre et compatible, et
- les déplacements des assemblages combustible (11) et des grappes (13) sont mis en œuvre par des robots (25, 27) respectifs,
le procédé comprenant l'étape suivante :
a) planifier les déplacements d'éléments d'assemblage (11, 13), la planification comprenant les opérations suivantes :
a1) attribuer à chaque assemblage combustible (11) un emplacement de destination (91),
a2) identifier l'ensemble des transferts de grappes (13) à effectuer et établir un ordre chronologique pour effectuer lesdits transferts,
le procédé étant **caractérisé en ce qu'**il comprend aussi les étapes suivantes :
b) optimiser la planification, l'optimisation étant mise en œuvre par des moyens informatiques et comprenant les opérations suivantes :
b1) estimer un temps pour réaliser les transferts de grappes (13) identifiés à l'opération a2),
b2) modifier certains au moins des paramètres de la planification de l'étape a),
b3) estimer un temps pour réaliser les transferts de grappes (13) avec les paramètres ainsi modifiés,
b4) retenir les paramètres ainsi modifiés si l'estimation de temps calculée à l'étape b3) est inférieure à celle estimée précédemment,
b5) réitérer à la suite les opérations b2), b3) et b4) au moins une fois, et
c) déplacer les éléments d'assemblage (11, 13) en fonction du résultat de l'optimisation de l'étape b).

2. Procédé selon la revendication 1, dans lequel l'opération a2) comprend :
- construire un graphe orienté dans lequel :
- les sommets (61) correspondent aux supports (11, 93, 95),
- les arcs correspondent à un transfert d'une grappe (13) depuis un support (11, 93, 95) à un autre,
- les sommets Steiner (65) correspondent à des supports (11, 93, 95) logeant temporairement une grappe (13) entre deux transferts intermédiaires,
- la longueur de chaque chemin est définie, au moins en partie, comme un critère représentatif du temps nécessaire pour assurer les transferts de grappes (13) le long dudit chemin.
- le nombre de changements d'outils (37) nécessaire sur le robot (27) pour assurer les transferts de grappes (13) le long dudit chemin, les estimations de temps des opérations b1) et b3) sont effectuées au moyen du graphe orienté.

3. Procédé selon l'une des revendications précédentes, dans lequel l'étape b) d'optimisation comprend en outre l'opération suivante :
i/ modifier l'ordre chronologique de l'ensemble des transferts de grappes (13) en sélectionnant successivement tous les transferts, chaque fois parmi ceux pour lesquels le support (11, 93, 95) de destination est libre, en commençant par le transfert pour lequel l'emplacement (91) du support (11, 93, 95) logeant la grappe (13) à transférer est le plus proche d'une position initiale du robot (27), puis en sélectionnant successivement les transferts restants de sorte que l'emplacement du support (11, 93, 95) logeant la grappe (13) à transférer soit le plus proche de l'emplacement du support (11, 93, 95) logeant la grappe (13) précédente à la fin du transfert précédent.

4. Procédé selon l'une des revendications précédentes, dans lequel, lors d'au moins une itération des opérations b2), b3), b4), l'opération b2) comprend la modification de l'attribution des emplacements (91) de destination aux assemblages combustible (11) de la manière suivante :
ii/ sélectionner les assemblages combustible (11) situés dans un emplacement (51) initial dans le réacteur (5) logeant initialement une grappe (13) dont le support final (11, 93, 95) est situé dans la zone de refroidissement (7),
iii/ attribuer à chaque assemblage combustible (11) sélectionné en ii/ un emplacement (91) de destination aléatoire parmi les emplacements (91) de destination situés au plus près dudit support final (11, 93, 95) de la grappe (13),
iv/ attribuer à chaque assemblage combustible (11) ayant un emplacement initial (51) dans le réacteur (5) et non sélectionné en ii/, aléatoirement les uns par rapport aux autres, un emplacement (91) de destination dans la zone de refroidissement (7) au plus près d'un accès (15) au réacteur (5).

5. Procédé selon l'une des revendications précédentes, dans lequel, lors d'au moins une itération des opérations b2), b3), b4), l'opération b2) comprend l'interversion des rangs de plusieurs transferts de grappes (13) dans l'ordre chronologique.

6. Procédé selon l'une des revendications précédentes comprenant :
- une série de plusieurs itérations des opérations b2), b3), b4), au cours desquelles l'opération b2) comprend la modification de l'attribution des emplacements (91) de destination aux assemblages combustible (11) de la manière suivante :
ii/ sélectionner les assemblages combustible (11) situés dans un emplacement (51) initial dans le réacteur (5) logeant initialement une grappe (13) dont le support (11, 93, 95) final est à la fois initialement libre et situé dans la zone de refroidissement (7),
iii/ attribuer à chaque assemblage combustible (11) sélectionné en ii/ un emplacement (91) de destination aléatoire parmi les emplacements (91) de destination situés au plus près dudit support (11, 93, 95) final de la grappe (13),
iv/ attribuer à chaque assemblage combustible (11) ayant un emplacement (51) initial dans le réacteur (5) et non sélectionné en ii/, aléatoirement les uns par rapport aux autres, un emplacement (91) de destination dans la zone de refroidissement (7) au plus près d'un accès (15) au réacteur (5),
puis,
- une série de plusieurs itérations des opérations b2), b3), b4), au cours desquelles l'opération b2) comprend l'interversion des rangs de plusieurs transferts de grappes (13) dans l'ordre chronologique.

7. Procédé selon la revendication 6 comprenant en outre, entre les deux séries d'itérations, l'opération intercalaire de modifier l'ordre chronologique de l'ensemble des transferts de grappes i/ selon la revendication 3.

8. Procédé selon l'une des revendications 6 et 7 comprenant en outre une série supplémentaire de plusieurs itérations des opérations b2), b3), b4), au cours desquelles l'opération b2) comprend :
v/ intervertir aléatoirement les attributions d'emplacements (91) de destination de plusieurs assemblages combustible (11) ayant un emplacement initial (51) dans le réacteur (5).

9. Procédé selon l'une des revendications 2 à 8, dans lequel l'opération a2) comprend en outre :
- calculer l'ensemble des chemins disjoints couvrant les sommets (61) et permettant de réaliser l'ensemble des transferts avec le minimum possible de changement d'outil du robot et le minimum possible de sommet Steiner, le calcul étant mise en œuvre par des moyens informatiques et des librairies d'optimisation mathématique pour la résolution de Problèmes Linéaires en Nombres Entiers (PLNE).

10. Procédé selon l'une des revendications 2 à 8 dans lequel :
- l'opération a2) comprend en outre :
- parcourir le graphe, hors circuits, de manière à construire un ensemble de chemins identifiant l'ensemble des transferts de grappes (13) à effectuer,
- attribuer un sommet Steiner (65) à chacun des chemins formant circuit,
- le procédé comprend une première série de plusieurs itérations des opérations b2), b3), b4), au cours desquelles
- l'opération b1), respectivement b3), consiste à évaluer le temps pour réaliser chacun des transferts des grappes (13) selon l'ensemble de chemins, hors circuits, en assimilant la longueur des chemins obtenus au temps de chaque transfert,
- l'opération b2) consiste à parcourir aléatoirement le graphe de manière à construire un ensemble de chemins, hors circuits, identifiant l'ensemble des transferts de grappes (13) à effectuer,
- l'opération b4) consiste à retenir l'ensemble de chemins construit si la longueur des chemins calculée à l'étape b3) est inférieure à celle des chemins précédents.

11. Procédé selon la revendication 10 comprenant en outre une seconde série de plusieurs itérations des opérations b2), b3), b4), au cours desquelles
- l'opération b1) consiste à évaluer le temps pour réaliser les transferts des grappes (13) selon l'ensemble de chemins, hors circuits, en assimilant la longueur des chemins obtenus au temps des transferts correspondants,
- l'opération b2) consiste à croiser des couples de chemins en leur sommet (61) commun de sorte que la longueur du chemin le plus long du couple après croisement soit inférieure à la longueur du chemin le plus long du couple avant croisement,
- l'opération b3) consiste à évaluer le temps pour réaliser les transferts des grappes (13) selon l'ensemble de chemins en assimilant la somme des longueurs du chemin le plus long de chaque couple après croisement au temps des transferts correspondants,
- l'opération b4) consiste à retenir l'ensemble de chemins après croisement si la somme calculée à l'étape b3) est inférieure à celle des chemins avant croisement.

12. Procédé selon l'une des revendications 10 et 11 comprenant en outre une troisième série de plusieurs itérations des opérations b2), b3), b4), au cours desquelles
- l'opération b1) consiste à évaluer le temps pour réaliser les transferts des grappes (13) selon l'ensemble des chemins, y compris les circuits, en assimilant la longueur des chemins obtenus au temps des transferts correspondants,
- l'opération b2) consiste à changer l'attribution des sommets Steiner (65) de chacun des chemins formant circuit,
- l'opération b3) consiste à évaluer le temps pour réaliser les transferts des grappes (13) selon l'ensemble de chemins, y compris les circuits, en assimilant la somme des longueurs des chemins au temps des transferts correspondants,
- l'opération b4) consiste à retenir l'attribution des sommets Steiner (65) à chacun des chemins formant circuit si le temps évalué à l'étape b3) est inférieur à celui précédemment évalué.

13. Procédé selon l'une des revendications 2 à 12 dans lequel :
- l'opération a2) comprend en outre :
- parcourir le graphe de manière à construire un ensemble de chemins identifiant l'ensemble des transferts de grappes (13) à effectuer,
- attribuer un sommet Steiner à chacun des chemins formant circuit,
- le procédé comprend une première série de plusieurs itérations des opérations b2), b3), b4), au cours desquelles
- l'opération b1), respectivement b3), consiste à évaluer le temps pour réaliser chacun des transferts des grappes (13) selon l'ensemble de chemins, hors circuits, en assimilant la longueur des chemins obtenus au temps de chaque transfert,
- l'opération b2) consiste à parcourir aléatoirement le graphe de manière à construire un ensemble de chemins, hors circuits, identifiant l'ensemble des transferts de grappes (13) à effectuer,
- l'opération b4) consiste à retenir l'ensemble de chemins construit si la longueur des chemins calculée à l'étape b3) est inférieure à celle des chemins précédents,
- le procédé comprend une seconde série de plusieurs itérations des opérations b2), b3), b4), au cours desquelles
- l'opération b1) consiste à évaluer le temps pour réaliser les transferts des grappes (13) selon l'ensemble de chemins, hors circuits, en assimilant la longueur des chemins obtenus au temps des transferts correspondants,
- l'opération b2) consiste à croiser des couples de chemins en leur sommet (61) commun de sorte que la longueur du chemin le plus long du couple après croisement soit inférieure à la longueur du chemin le plus long du couple avant croisement,
- l'opération b3) consiste à évaluer le temps pour réaliser les transferts des grappes (13) selon l'ensemble de chemins en assimilant la somme des longueurs du chemin le plus long de chaque couple après croisement au temps des transferts correspondants,
- l'opération b4) consiste à retenir l'ensemble de chemins après croisement si la somme calculée à l'étape b3) est inférieure à celle des chemins avant croisement,
- le procédé comprend une troisième série de plusieurs itérations des opérations b2), b3), b4), au cours desquelles
- l'opération b1) consiste à évaluer le temps pour réaliser les transferts des grappes (13) selon l'ensemble des chemins, y compris les circuits, en assimilant la longueur des chemins obtenus au temps des transferts correspondants,
- l'opération b2) consiste à changer l'attribution des sommets Steiner (65) de chacun des chemins formant circuit,
- l'opération b3) consiste à évaluer le temps pour réaliser les transferts des grappes (13) selon l'ensemble de chemins, y compris les circuits, en assimilant la somme des longueurs des chemins au temps des transferts correspondants,
- l'opération b4) consiste à retenir l'attribution des sommets Steiner (65) à chacun des chemins formant circuit si le temps évalué à l'étape b3) est inférieur à celui précédemment évalué.

14. Procédé selon l'une des revendications 9 à 13, dans lequel la manière d'établir l'ordre chronologique pour effectuer lesdits transferts de grappes (13) dépend d'un critère relatif au temps disponible prévu avant la remise en fonctionnement du réacteur (5).

15. Procédé selon l'une des revendications précédentes dans lequel, au cours de l'étape c), des outils (37) sont interchangés sur l'un au moins des robots (27) en fonction de la compatibilité de chaque outil (37) avec les éléments d'assemblage (11, 13) à manipuler.

## Patentansprüche

1. Wartungsverfahren in einem Kernkraftwerk, wobei:
- jede Brennelement-Anordnung (11) aus mehreren von einem Anfangsort (51) zu einem Zielort (91) bewegt wird,
- jedes Bündel (13) aus mehreren von einer anfänglichen Brennelement-Anordnung (11) in eine endgültige Brennelement-Anordnung (11) bewegt wird, wobei die Bewegungen der Bündel (13) in einer vom Reaktor (5) entfernten Kühlzone (7) ausgeführt werden,
- eine Bewegung eines Bündels (13) in einen oder mehrere aufeinanderfolgende Transfervorgänge unterteilt wird, zwischen denen das Bündel (13) vorübergehend in einer freien und kompatiblen Halterung (11, 93, 95) untergebracht wird, und
- die Bewegungen der Brennelement-Anordnungen (11) und der Bündel (13) von jeweiligen Robotern (25, 27) ausgeführt werden,
wobei das Verfahren den folgenden Schritt umfasst:
a) Planen der Bewegungen der Anordnung-Elemente (11, 13), wobei die Planung die folgenden Operationen umfasst:
a1) Zuweisen eines Zielorts (91) zu jeder Brennelement-Anordnung (11),
a2) Identifizieren des Satzes der durchzuführenden Transfervorgänge von Bündeln (13) und Festlegen einer chronologischen Reihenfolge zum Durchführen dieser Transfervorgänge;
wobei das Verfahren **dadurch gekennzeichnet ist, dass** es weiter die folgenden Schritte umfasst:
b) Optimieren der Planung, wobei die Optimierung durch Datenverarbeitungsmittel durchgeführt wird und die folgenden Operationen umfasst:
b1) Abschätzen einer Zeit für die Durchführung der in Operation a2) identifizierten Transfervorgänge von Bündeln (13),
b2) Modifizieren von mindestens einigen der Parameter der Planung von Schritt a),
b3) Abschätzen einer Zeit für die Durchführung der Transfervorgänge von Bündeln (13) mit den so modifizierten Parametern,
b4) Beibehalten der so modifizierten Parameter, wenn die in Schritt b3) berechnete Zeit-Abschätzung kleiner ist als die zuvor abgeschätzte;
b5) danach mindestens einmaliges Wiederholen der Operationen b2), b3) und b4), und
c) Bewegen der Anordnung-Elemente (11, 13) in Abhängigkeit von dem Ergebnis der Optimierung von Schritt b).

2. Verfahren nach Anspruch 1, wobei die Operation a2) umfasst:
- Konstruieren eines gerichteten Graphen, wobei:
- die Eckpunkte (61) den Halterungen (11, 93, 95) entsprechen,
- die Bögen einem Transfervorgang eines Bündels (13) von einer Halterung (11, 93, 95) zu einer anderen entsprechen,
- die Steiner-Eckpunkte (65) Halterungen (11, 93, 95) entsprechen, die zwischen zwei intermediären Transfervorgängen vorübergehend ein Bündel (13) aufnehmen,
- die Länge jedes Pfades zumindest teilweise als ein Kriterium definiert wird, das für die Zeit repräsentativ ist, die erforderlich ist, um die Transfervorgänge von Bündeln (13) entlang des Pfades sicherzustellen,
- die Anzahl von Werkzeugwechseln (37), die am Roboter (27) erforderlich ist, um die Transfervorgänge von Bündeln (13) entlang des Pfades sicherzustellen, die Zeitabschätzungen der Operationen b1) und b3) mittels des gerichteten Graphen durchgeführt werden.

3. Verfahren nach einem der vorhergehenden Ansprüche, wobei der Schritt b) der Optimierung ferner die folgende Operation umfasst:
i) Modifizieren der chronologischen Reihenfolge des Satzes der Transfervorgänge von Bündeln (13), indem nacheinander alle Transfervorgänge ausgewählt werden, jedes Mal unter denen, für welche die Ziel-Halterung (11, 93, 95) frei ist, beginnend mit dem Transfervorgang, für den der Ort (91) der Halterung (11, 93, 95), die das zu übertragende Bündel (13) beherbergt, einer Anfangsposition des Roboters (27) am nächsten ist, und indem dann nacheinander die verbleibenden Transfervorgänge so ausgewählt werden, dass der Ort der Halterung (11, 93, 95), die das zu übertragende Bündel (13) beherbergt, am nächsten zu dem Ort der Halterung (11, 93, 95) ist, die das vorherige Bündel (13) am Ende des vorherigen Transfervorgangs beherbergt.

4. Verfahren nach einem der vorhergehenden Ansprüche, wobei während mindestens einer Iteration der Operationen b2), b3), b4) die Operation b2) die Modifikation der Zuordnung der Ziel-Orte (91) zu den Brennelement-Anordnungen (11) in der folgenden Weise umfasst:
ii) Auswählen der Brennelement-Anordnungen (11), die sich an einem Anfangsort (51) im Reaktor (5) befinden, die anfänglich ein Bündel (13) beherbergen, dessen endgültige Halterung (11, 93, 95) sich in der Kühlzone (7) befindet,
iii) Zuweisen eines zufälligen Zielorts (91) unter den Zielorten (91), die sich am nächsten an der endgültigen Halterung (11, 93, 95) des Bündels (13) befinden, zu jeder Brennelement-Anordnung (11), die in ii) ausgewählt wurde,
iv) zufälliges einander Zuweisen eines Zielorts (91) in der Kühlzone (7), so nah wie möglich an einem Zugang (15) zum Reaktor (5), zu jeder Brennelement-Anordnung (11), die einen Anfangsort (51) im Reaktor (5) hat und in ii) nicht ausgewählt wurde.

5. Verfahren nach einem der vorhergehenden Ansprüche, wobei während mindestens einer Iteration der Operationen b2), b3), b4) die Operation b2) das Permutieren der Ränge mehrerer Transfervorgänge von Bündeln (13) in der chronologischen Reihenfolge umfasst.

6. Verfahren nach einem der vorhergehenden Ansprüche, umfassend:
- eine Reihe von mehreren Iterationen der Operationen b2), b3), b4), wobei die Operation b2) die Modifikation der Zuordnung der Zielorte (91) zu den Brennelement-Anordnungen (11) wie folgt umfasst:
ii) Auswählen der Brennelement-Anordnungen (11), die sich an einem Anfangsort (51) im Reaktor (5) befinden und anfänglich ein Bündel (13) beherbergen, dessen endgültige Halterung (11, 93, 95) zugleich anfänglich frei ist und sich in der Kühlzone (7) befindet,
iii) Zuweisen eines zufälligen Zielorts (91) unter den Zielorten (91), die sich am nächsten an der endgültigen Halterung (11, 93, 95) des Bündels (13) befinden, zu jeder Brennelement-Anordnung (11), die in ii) ausgewählt wurde;
iv) zufälliges einander Zuweisen eines Zielorts (91) in der Kühlzone (7), so nah wie möglich an einem Zugang (15) zum Reaktor (5), zu jeder Brennelement-Anordnung (11), die einen Anfangsort (51) im Reaktor (5) hat und in ii) nicht ausgewählt wurde, und dann
- eine Reihe mehrerer Iterationen der Operationen b2), b3), b4), wobei die Operation b2) das Permutieren der Ränge mehrerer Transfervorgänge von Bündeln (13) in der chronologischen Reihenfolge umfasst.

7. Verfahren nach Anspruch 6, ferner umfassend, zwischen den zwei Reihen von Iterationen, die zwischengeschaltete Operation des Modifizierens der chronologischen Reihenfolge des Satzes der Transfervorgänge von Bündeln i) gemäß Anspruch 3.

8. Verfahren nach einem der Ansprüche 6 und 7, ferner umfassend eine zusätzliche Reihe mehrerer Iterationen der Operationen b2), b3), b4), wobei die Operation b2) umfasst:
v) zufälliges Permutieren der Zuordnungen von Zielorten (91) mehrerer Brennelement-Anordnungen (11) mit einem Anfangsort (51) im Reaktor (5).

9. Verfahren nach einem der Ansprüche 2 bis 8, wobei die Operation a2) ferner umfasst:
- Berechnen des Satzes disjunkter Pfade, welche die Eckpunkte (61) abdecken und es ermöglichen, den Satz der Transfervorgänge mit dem minimal möglichen Werkzeugwechsel des Roboters und dem minimal möglichen Steiner-Eckpunkt durchzuführen, wobei die Berechnung von Datenverarbeitungsmitteln und Bibliotheken zur mathematischen Optimierung zur Lösung von linearen Problemen in ganzen Zahlen (PLNE) durchgeführt wird.

10. Verfahren nach einem der Ansprüche 2 bis 8, wobei:
- die Operation a2) weiter umfasst:
- Durchlaufen des Graphen, ohne Schleifen, um einen Satz von Pfaden zu erstellen, welche den Satz der durchzuführenden Transfervorgänge von Bündeln (13) identifizieren,
- Zuweisen eines Steiner-Eckpunkts (65) zu jedem der Pfade, der eine Schleife bildet,
- wobei das Verfahren eine erste Reihe mehrerer Iterationen der Operationen b2), b3), b4) umfasst, bei denen
- die Operation b1) bzw. b3) darin besteht, die Zeit zu bewerten, um jeden der Transfervorgänge der Bündel (13) entlang des Satzes von Pfaden ohne Schleifen durchzuführen, indem die Länge der erhaltenen Pfade an die Zeit jedes Transfervorgangs angepasst wird,
- die Operation b2) darin besteht, den Graphen zufällig zu durchlaufen, um einen Satz von Pfaden ohne Schleifen zu konstruieren, welcher den Satz der durchzuführenden Transfervorgänge von Bündeln (13) identifiziert;
- die Operation b4) darin besteht, den Satz von Pfaden beizubehalten, die konstruiert wurden, wenn die Länge der in Schritt b3) berechneten Pfade kleiner als diejenige der vorhergehenden Pfade ist.

11. Verfahren nach Anspruch 10, ferner umfassend eine zweite Reihe mehrerer Iterationen von Operationen b2), b3), b4), bei denen
- die Operation b1) darin besteht, die Zeit zu bewerten, um die Transfervorgänge der Bündel (13) durchzuführen, gemäß dem Satz von Pfaden ohne Schleifen, indem die Länge der erhaltenen Pfade an die Zeit der entsprechenden Transfervorgänge angepasst wird,
- die Operation b2) darin besteht, Paare von Pfaden an ihrem gemeinsamen Eckpunkt (61) zu kreuzen, so dass die Länge des längsten Pfades des Paares nach dem Kreuzen kleiner ist als die Länge des längsten Pfades des Paares vor dem Kreuzen,
- die Operation b3) darin besteht, die Zeit zum Ausführen der Transfervorgänge der Bündel (13) gemäß dem Satz von Pfaden zu bewerten, indem die Summe der Längen des längsten Pfades jedes Paares nach dem Kreuzen an die Zeit der entsprechenden Transfervorgänge angepasst wird,
- die Operation b4) darin besteht, den Satz von Pfaden nach dem Kreuzen beizubehalten, wenn die in Schritt b3) berechnete Summe kleiner ist als die der Pfade vor dem Kreuzen.

12. Verfahren nach einem der Ansprüche 10 und 11, umfassend ferner eine dritte Reihe von mehreren Iterationen der Operationen b2), b3), b4), bei denen:
- die Operation b1) darin besteht, die Zeit zum Ausführen der Transfervorgänge der Bündel (13) gemäß dem Satz von Pfaden einschließlich der Schleifen zu bewerten, indem die Länge der erhaltenen Pfade an die Zeit der entsprechenden Transfervorgänge angepasst wird,
- die Operation b2) darin besteht, die Zuordnung der Steiner-Eckpunkte (65) jedes der Pfade, die eine Schleife bilden, zu ändern,
- die Operation b3) darin besteht, die Zeit zu bewerten, um die Transfervorgänge der Bündel (13) gemäß dem Satz von Pfaden einschließlich der Schleifen durchzuführen, indem die Summe der Längen der Pfade an die Zeit der entsprechenden Transfervorgänge angepasst wird,
- die Operation b4) darin besteht, die Zuordnung der Steiner-Eckpunkte (65) zu jedem der Pfade, die eine Schleife bilden, beizubehalten, wenn die in Schritt b3) ausgewertete Zeit kleiner ist als die zuvor ausgewertete.

13. Verfahren nach einem der Ansprüche 2 bis 12, wobei:
- die Operation a2) weiter umfasst:
- Durchlaufen des Graphen, um einen Satz von Pfaden zu erstellen, welche die durchzuführenden Transfervorgänge von Bündeln (13) identifizieren,
- Zuweisen eines Steiner-Eckpunkts zu jedem Pfad, der eine Schleife bildet,
- wobei das Verfahren eine erste Reihe mehrerer Iterationen der Operationen b2), b3), b4) umfasst, bei denen
- die Operation b1) bzw. b3) darin besteht, die Zeit zu bewerten, um jeden der Transfervorgänge der Bündel (13) durchzuführen, gemäß dem Satz von Pfaden ohne Schleifen, indem die Länge der erhaltenen Pfade an die Zeit von jedem Transfervorgang angepasst wird;
- die Operation b2) darin besteht, den Graphen zufällig zu durchlaufen, um einen Satz von Pfaden ohne Schleifen zu konstruieren, der den Satz der durchzuführenden Transfervorgänge von Bündeln (13) identifiziert;
- die Operation b4) darin besteht, den Satz von konstruierten Pfaden beizubehalten, wenn die Länge der in Schritt b3) berechneten Pfade kleiner als die der vorhergehenden Pfade ist,
- wobei das Verfahren eine zweite Reihe von mehreren Iterationen der Operationen b2), b3), b4) umfasst, bei denen
- die Operation b1) darin besteht, die Zeit zum Ausführen der Transfervorgänge der Bündel (13) gemäß dem Satz von Pfaden ohne Schleifen zu bewerten, indem die Länge der erhaltenen Pfade an die Zeit der entsprechenden Transfervorgänge angepasst wird,
- die Operation b2) darin besteht, Paare von Pfaden an ihrem gemeinsamen Eckpunkt (61) zu kreuzen, so dass die Länge des längsten Pfades des Paares nach dem Kreuzen kleiner ist als die Länge des längsten Pfades des Paares vor dem Kreuzen,
- die Operation b3) darin besteht, die Zeit zum Ausführen der Transfervorgänge der Bündel (13) gemäß dem Satz von Pfaden zu bewerten, indem die Summe der Längen des längsten Pfades jedes Paares nach dem Kreuzen an die Zeit der entsprechenden Transfervorgänge angepasst wird,
- die Operation b4) darin besteht, den Satz von Pfaden nach dem Kreuzen beizubehalten, wenn die in Schritt b3) berechnete Summe kleiner ist als die der Pfade vor dem Kreuzen,
- wobei das Verfahren eine dritte Reihe von mehreren Iterationen der Operationen b2), b3), b4) umfasst, bei denen
- die Operation b1) darin besteht, die Zeit zum Ausführen der Transfervorgänge der Bündel (13) gemäß dem Satz der Pfade einschließlich der Schleifen zu bewerten, indem die Länge der erhaltenen Pfade an die Zeit der entsprechenden Transfervorgänge angepasst wird.
- die Operation b2) darin besteht, die Zuordnung der Steiner-Eckpunkte (65) jedes der Pfade, die eine Schleife bilden, zu ändern,
- die Operation b3) darin besteht, die Zeit zum Ausführen der Transfervorgänge der Bündel (13) gemäß dem Satz von Pfaden einschließlich der Schleifen zu bewerten, indem die Summe der Längen der Pfade an die Zeit der entsprechenden Transfervorgänge angepasst wird;
- die Operation b4) darin besteht, die Zuordnung der Steiner-Eckpunkte (65) zu jedem der Pfade, die eine Schleife bilden, beizubehalten, wenn die in Schritt b3) ausgewertete Zeit kleiner ist als die zuvor ausgewertete.

14. Verfahren nach einem der Ansprüche 9 bis 13, wobei die Art und Weise der Festlegung der chronologischen Reihenfolge für die Durchführung der Transfervorgänge von Bündeln (13) von einem Kriterium abhängt, das sich auf die verfügbare Zeit bezieht, die vor dem Neustart des Reaktors (5) vorgesehen ist.

15. Verfahren nach einem der vorhergehenden Ansprüche, wobei während des Schritts c) Werkzeuge (37) an mindestens einem der Roboter (27) ausgetauscht werden, in Abhängigkeit von der Kompatibilität jedes Werkzeugs (37) mit den zu handhabenden Anordnung-Elementen (11, 13).

## Claims

1. Method for maintenance in a nuclear power plant, wherein
- each fuel assembly (11) among a plurality is moved from an initial location (51) to a destination location (91),
- each cluster (13) among a plurality is moved from an initial fuel assembly (11) to a final fuel assembly (11), the movements of the clusters (13) being carried out in a cooling area (7) that is distanced from the reactor (5),
- a cluster (13) movement is broken down into one or more successive transfers, the cluster (13) being temporarily housed in an unoccupied and compatible holder (11, 93, 95) between each transfer, and
- the movements of fuel assemblies (11) and clusters (13) are implemented by respective robots (25, 27),
the method comprises the following step:
a) scheduling the movements of the assembly members (11, 13), said scheduling comprising the operations of:
a1) assigning a destination location (91) to each fuel assembly (11),
a2) identifying all transfers of clusters (13) to be performed and establishing a chronological order for such transfers,
the method being **characterized in that** it further comprises the following steps:
b) optimizing the schedule, the optimization being implemented by computer means and comprising the following operations:
b1) estimating a time required to complete the transfers of clusters (13) identified in operation a2),
b2) modifying at least some of the scheduling parameters of step a),
b3) estimating a time required to complete the transfers of clusters (13) with the modified parameters,
b4) retaining the modified parameters if the time estimate calculated in step b3) is less than the previous estimate,
b5) repeating the series of operations b2), b3), and b4) at least once, and
c) moving the assembly members (11, 13) according to the result of the optimization of step b).

2. Method according to claim 1, wherein operation a2) comprises
- constructing a directed graph wherein:
- the vertices (61) correspond to the holders (11, 93, 95),
- the directed edges correspond to the transfer of a cluster (13) from one holder (11, 93, 95) to another,
- the Steiner vertices (65) correspond to holders (11, 93, 95) temporarily housing a cluster (13) between two intermediate transfers,
- the length of each path is defined, at least in part, as a criterion representative of the time required to transfer the clusters (13) along said path,
- the number of tool changes (37) required on the robot (27) in order to carry out the transfers of clusters (13) along said path, the time estimates of operations b1) and b3) are made using the directed graph.

3. Method according to one of the preceding claims, wherein the optimization step b) further comprises the following operation:
i/ modifying the chronological order of all transfers of clusters (13) by successively selecting all the transfers, each time from those for which the destination holder (11, 93, 95) is unoccupied, starting with the transfer for which the location (91) of the holder (11, 93, 95) housing the cluster (13) to be transferred is closest to an initial position of the robot (27), and then successively selecting the remaining transfers so that the location of the holder (11, 93, 95) housing the cluster (13) to be transferred is closest to the location of the holder (11, 93, 95) housing the preceding cluster (13) at the end of the preceding transfer.

4. Method according to one of the preceding claims, wherein, during at least one iteration of operations b2), b3), b4), operation b2) comprises modifying the assignment of destination locations (91) to fuel assemblies (11) as follows:
ii/ selecting the fuel assemblies (11) located in an initial location (51) in the reactor (5) and initially housing a cluster (13) for which the final holder (11, 93, 95) is located in the cooling area (7),
iii/ assigning, to each fuel assembly (11) selected in ii/, a random destination location (91) among the destination locations (91) located as close as possible to said final holder (11, 93, 95) for the cluster (13),
iv/ assigning, to each fuel assembly (11) having an initial location (51) in the reactor (5) and not selected in ii/, randomly one with respect to the others, a destination location (91) in the cooling area (7) that is as close as possible to an access (15) to the reactor (5).

5. Method according to one of the preceding claims, wherein, during at least one iteration of operations b2), b3), b4), operation b2) comprises interchanging the positions of several transfers of clusters (13) within their chronological order.

6. Method according to one of the preceding claims, comprising:
- a series of multiple iterations of operations b2), b3), b4), during which operation b2) comprises modifying the assignment of destination locations (91) to fuel assemblies (11) as follows:
ii/ selecting the fuel assemblies (11) located in an initial location (51) in the reactor (5) initially housing a cluster (13) for which the final holder (11, 93, 95) is both initially unoccupied and located in the cooling area (7),
iii/ assigning, to each fuel assembly (11) selected in ii/, a random destination location (91) among the destination locations (91) located as close as possible to said final holder (11, 93, 95) for the cluster (13),
iv/ assigning, to each fuel assembly (11) having an initial location (51) in the reactor (5) and not selected in ii/, randomly one with respect to the others, a destination location (91) in the cooling area (7) that is as close as possible to an access (15) to the reactor (5),
then,
- a series of multiple iterations of operations b2), b3), b4), during which operation b2) comprises interchanging the positions of several transfers of clusters (13) within their chronological order.

7. Method according to claim 6, further comprising, between the two series of iterations, the intermediate operation i/ of modifying the chronological order of all transfers of clusters according to claim 3.

8. Method according to one of claims 6 and 7, further comprising an additional series of multiple iterations of operations b2), b3), b4), during which operation b2) comprises:
v/ randomly interchanging the assignments of destination locations (91) for several fuel assemblies (11) having an initial location (51) in the reactor (5).

9. Method according to one of claims 2 to 8, wherein operation a2) further comprises:
- calculating all disjoint paths covering the vertices (61) and enabling all the transfers with the minimum possible tool changes of the robot and the minimum possible Steiner vertices, the calculation being carried out by computer means and mathematical optimization libraries for the resolution of Integer Linear Problems (ILP).

10. Method according to one of claims 2 to 8, wherein:
- operation a2) further comprises:
- traversing the graph, excluding circuits, in order to construct a set of paths identifying all transfers of clusters (13) to be performed,
- assigning a Steiner vertex (65) to each of the paths forming a circuit,
- the method comprises a first series of multiple iterations of operations b2), b3), b4), during which
- operation b1), respectively b3), consists of evaluating the time required to complete each of the transfers of clusters (13) according to the set of paths, excluding circuits, by equating the length of the paths obtained to the time of each transfer,
- operation b2) consists of randomly traversing the graph in order to construct a set of paths, excluding circuits, identifying all transfers of clusters (13) to be performed,
- operation b4) consists of retaining the constructed set of paths if the length of the paths calculated in step b3) is less than that of previous paths.

11. Method according to claim 10, further comprising a second series of multiple iterations of operations b2), b3), b4), during which
- operation b1) consists of evaluating the time required to complete the transfers of clusters (13) according to the set of paths, excluding circuits, by equating the length of the paths obtained to the time of the corresponding transfers,
- operation b2) consists of intersecting pairs of paths at their common vertex (61) so that the length of the longest path of the pair after the intersection is less than the length of the longest path of the pair before the intersection,
- operation b3) consists of evaluating the time required to complete the transfers of clusters (13) according to the set of paths, by equating the sum of the lengths of the longest path of each pair after the intersection to the time of the corresponding transfers,
- operation b4) consists of retaining the set of paths after the intersection if the sum calculated in step b3) is less than that of the paths before the intersection.

12. Method according to one of claims 10 and 11, further comprising a third series of multiple iterations of operations b2), b3), b4), during which
- operation b1) consists of evaluating the time required to complete the transfers of clusters (13) according to the set of paths, including circuits, by equating the length of the paths obtained to the time of the corresponding transfers,
- operation b2) consists of changing the assignment of Steiner vertices (65) of each of the paths forming a circuit,
- operation b3) consists of evaluating the time required to complete the transfers of clusters (13) according to the set of paths, including circuits, by equating the sum of the lengths of the paths to the time of the corresponding transfers,
- operation b4) consists of retaining the assignment of Steiner vertices (65) to each of the paths forming a circuit if the time evaluated in step b3) is less than the previously evaluated time.

13. Method according to one of claims 2 to 12, wherein:
- operation a2) further comprises:
- traversing the graph in order to construct a set of paths identifying all transfers of clusters (13) to be performed,
- assigning a Steiner vertex to each of the paths forming a circuit,
- the method comprises a first series of multiple iterations of operations b2), b3), b4), during which
- operation b1), respectively b3), consists of evaluating the time required to complete each of the transfers of clusters (13) according to the set of paths, excluding circuits, by equating the length of the paths obtained to the time of each transfer,
- operation b2) consists of randomly traversing the graph in order to construct a set of paths, excluding circuits, identifying all transfers of clusters (13) to be performed,
- operation b4) consists of retaining the constructed set of paths if the length of the paths calculated in step b3) is less than that of previous paths,
- the method comprises a second series of multiple iterations of operations b2), b3), b4), during which:
- operation b1) consists of evaluating the time required to complete the transfers of clusters (13) according to the set of paths, excluding circuits, by equating the length of the paths obtained to the time of the corresponding transfers,
- operation b2) consists of intersecting pairs of paths at their common vertex (61) so that the length of the longest path of the pair after the intersection is less than the length of the longest path of the pair before the intersection,
- operation b3) consists of evaluating the time required to complete the transfers of clusters (13) according to the set of paths, by equating the sum of the lengths of the longest path of each pair after the intersection to the time of the corresponding transfers,
- operation b4) consists of retaining the set of paths after the intersection if the sum calculated in step b3) is less than that of the paths before the intersection,
- the method comprises a third series of multiple iterations of operations b2), b3), b4), during which:
- operation b1) consists of evaluating the time required to complete the transfers of clusters (13) according to the set of paths, including circuits, by equating the length of the paths obtained to the time of the corresponding transfers,
- operation b2) consists of changing the assignment of Steiner vertices (65) of each of the paths forming a circuit,
- operation b3) consists of evaluating the time required to complete the transfers of clusters (13) according to the set of paths, including circuits, by equating the sum of the lengths of the paths to the time of the corresponding transfers,
- operation b4) consists of retaining the assignment of Steiner vertices (65) to each of the paths forming a circuit if the time evaluated in step b3) is less than the previously evaluated time.

14. Method according to one of claims 9 to 13, wherein the manner of establishing the chronological order for carrying out said transfers of clusters (13) depends on a criterion relating to the projected time available before the reactor (5) is restarted.

15. Method according to one of the preceding claims wherein, during step c), tools (37) are interchanged on at least one of the robots (27) according to the compatibility of each tool (37) with the assembly members (11, 13) to be manipulated.
